# EUROPEAN PATENT APPLICATION

(11) **EP 3 860 206 A1**
(43) Date of publication of application: **04.08.2021**
(21) Application number: 19865584.7
(22) Date of filing: 04.09.2019
(51) Int. Cl.: H04W 28/04, H04W 72/04, H04W 72/12, H04W 92/18

(54) **COMMUNICATION DEVICE**

(30) Priority: 27.09.2018 JP 2018182266
(71) Applicant: Sony Group Corporation, Tokyo 108-0075 (JP)
(72) Inventor: UCHIYAMA, Hiromasa, Tokyo 108-0075 (JP); KUSASHIMA, Naoki, Tokyo 108-0075 (JP)
(74) Representative: Witte, Weller & Partner Patentanwälte mbB
(86) International application number: PCT/JP2019/034703
(87) International publication number: WO 2020/066506

(57) **Abstract**

To provide a mechanism that enables appropriate recovery when a communication error occurs in terminal-to-terminal communication. A communication apparatus including: a control unit (240) that transmits a negative acknowledgement by a sidelink in a case of failing to receive a packet transmitted from a transmission terminal (200A) by a sidelink, and transmits information for imposing restrictions on an operation of a peripheral terminal (200C) by a sidelink in association with the negative acknowledgement.

## Description

### TECHNICAL FIELD

The present disclosure relates to a communication apparatus.

### BACKGROUND ART

Wireless access scheme and wireless network for cellular mobile communication (hereinafter, "Long Term Evolution (LTE)", "LTE-Advanced (LTE-A)", "LTE-Advanced Pro (LTE-A Pro)", "5G (5th generation), "New Radio (NR)", "New Radio Access Technology (NRAT)", "Evolved Universal Terrestrial Radio Access (EUTRA)", or "Further EUTRA (FEUTRA)") are considered in the 3rd Generation Partnership Project (3GPP). Note that, in the following description, LTE includes LTE-A, LTE-A Pro, and EUTRA, and NR includes NRAT and FEUTRA. In LTE and NR, a base station apparatus (base station) is also called eNodeB (evolved NodeB) in LTE and gNodeB in NR, and the terminal apparatus (mobile station, mobile station apparatus, terminal) is also called UE (User Equipment). The LTE and NR are cellular communication systems in which a plurality of areas covered by a base station apparatus is arranged in a cell shape. A single base station apparatus may manage a plurality of cells.

The NR is radio access technology (RAT), which is different from the LTE, as a next-generation wireless access scheme with respect to the LTE. The NR is an access technology that can support various use cases including enhanced mobile broadband (eMBB), massive machine type communications (mMTC) and ultra reliable and low latency communications (URLLC). The NR will be considered aiming at a technical framework that corresponds to usage scenarios, requirements conditions, arrangement scenarios, and the like in those use cases.

The URLLC is a use case that requires low delay (low latency). In order to achieve low delay, for example, a base station controls a transmission method (transmission resource, transmission power, modulation scheme, coding scheme, and the like) in communication between the base station and a terminal apparatus and in communication between terminal apparatuses. In addition, as a technology for achieving low delay, for example, Patent Document 1 described below discloses a technology of transmitting transmission data divided using a plurality of transmission paths so that even when the communication quality of one transmission path is poor, complementation is made by another transmission path.

### CITATION LIST

### PATENT DOCUMENT

Patent Document 1: Japanese Patent Application Laid-Open No. 2008-177754

### SUMMARY OF THE INVENTION

### PROBLEMS TO BE SOLVED BY THE INVENTION

One of the viewpoints for achieving low delay in terminal-to-terminal communication is to appropriately perform recovery when a communication error occurs. The technology described in Patent Document 1 described above is a technology for preventing communication errors from occurring in the first place, and it cannot be said that the effect from this viewpoint is sufficient.

Therefore, the present disclosure provides a mechanism that enables appropriate recovery when a communication error occurs in terminal-to-terminal communication.

### SOLUTIONS TO PROBLEMS

According to the present disclosure, there is provided a communication apparatus including: a control unit that transmits a negative acknowledgement by a sidelink in a case of failing to receive a packet transmitted from a transmission terminal by a sidelink, and transmits information for imposing restrictions on an operation of a peripheral terminal by a sidelink in association with the negative acknowledgement.

Furthermore, according to the present disclosure, there is provided a communication apparatus including: a control unit that transmits a negative acknowledgement by a sidelink in a case of failing to receive a packet transmitted from a transmission terminal by a sidelink, and transmits information for controlling retransmission of the packet by the transmission terminal by a sidelink in association with the negative acknowledgement.

Furthermore, according to the present disclosure, there is provided a communication apparatus including: a control unit that transmits a packet to a reception terminal by a sidelink, receives a negative acknowledgement indicating that the reception terminal has failed to receive the packet and information for controlling retransmission of the packet associated with the negative acknowledgement by a sidelink, and performs control of the retransmission of the packet on the basis of the information received.

### BRIEF DESCRIPTION OF DRAWINGS

Fig. 1 is a diagram showing an overall configuration of a system according to an embodiment of the present disclosure.
Fig. 2 is a diagram for explaining an outline of a proposed technology.
Fig. 3 is a block diagram showing an example of a configuration of a base station according to the present embodiment.
Fig. 4 is a block diagram showing an example of a configuration of a terminal apparatus according to the present embodiment.
Fig. 5 is a diagram showing an example of a resource pattern that can be used for retransmission of a first packet by a transmission terminal according to the present embodiment.
Fig. 6 is a diagram for explaining an example of a method of setting a resource for transmitting accompanying information.
Fig. 7 is a diagram for explaining an example of a method of setting a resource for transmitting accompanying information.
Fig. 8 is a diagram for explaining an example of a method of setting a resource for transmitting accompanying information.
Fig. 9 is a sequence diagram showing an example of flow of processing executed in a system according to the present embodiment.
Fig. 10 is a flowchart showing an example of flow of processing executed in a reception terminal according to the present embodiment.
Fig. 11 is a flowchart showing an example of flow of processing executed in a peripheral terminal according to the present embodiment.
Fig. 12 is a flowchart showing an example of flow of processing executed in a transmission terminal according to the present embodiment.
Fig. 13 is a block diagram showing a first example of a schematic configuration of an eNB.
Fig. 14 is a block diagram showing a second example of a schematic configuration of an eNB.
Fig. 15 is a block diagram showing an example of a schematic configuration of a smartphone.
Fig. 16 is a block diagram showing an example of a schematic configuration of a car navigation apparatus.

### MODE FOR CARRYING OUT THE INVENTION

Preferred embodiments of the present disclosure will be described in detail below with reference to the accompanying drawings. Note that, in the present specification and the drawings, configuration elements that have substantially the same function and configuration are denoted with the same reference numerals, and repeated explanation is omitted.

Note that the description is given in the order below.
1. Introduction
   1.1. Overall configuration
   1.2. Technical issues
   1.3. Outline of proposed technology
2. Configuration examples
   2.1. Configuration example of base station
   2.2. Configuration example of terminal apparatus
3. Technical features
   3.1. Transmission of NACK and accompanying information
      3.1.1. First accompanying information
      3.1.2. Second accompanying information
      3.1.3. Third accompanying information
      3.1.4. Fourth accompanying information
      3.1.5. Method of transmitting accompanying information
   3.2. Correspondence between first packet and ACK/NACK
   3.3. Retransmission of first packet
   3.4. Flow of processing
4. Use cases
5. Application example
6. Conclusion

### <<1. Introduction>>

### <1.1. Overall configuration>

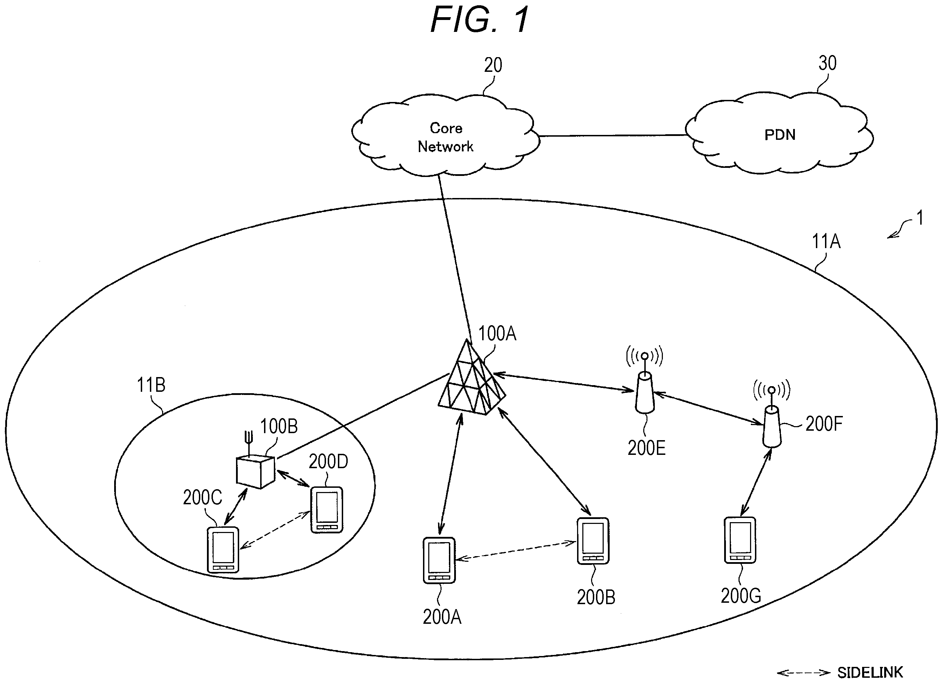

Fig. 1 is a diagram showing an overall configuration of a system according to an embodiment of the present disclosure. As shown in Fig. 1, a system 1 includes a base station 100 (100A and 100B), a terminal apparatus 200 (200A to 200G), a core network 20, and a packet data network (PDN) 30.

The base station 100 operates a cell 11 (11A and 11B) and provides a wireless communication service to one or more terminal apparatuses located inside the cell 11. The cell 11 is operated according to any wireless communication scheme such as the LTE, the NR, or the like, for example. The base station 100A is a macro cell base station that operates a macro cell 11A. The base station 100B is a small cell base station that operates a small cell 11B. The base station 100 is connected to the core network 20. The core network 20 is connected to the PDN 30 via a gateway apparatus (not shown). The base stations 100 are connected by an X2 interface and can exchange information with each other.

The core network 20 can include, for example, mobility management entity (MME), serving gateway (S-GW), PDN gateway (P-GW), policy and charging rule function (PCRF), and home subscriber server (HSS). The MME is a control node that handles control plane signals, and manages the movement state of the terminal apparatus. The S-GW is a control node that handles user plane signals, and is a gateway apparatus that switches a user data transfer path. The P-GW is a control node that handles user plane signals, and is a gateway apparatus that serves as a connection point between the core network 20 and the PDN 30. The PCRF is a control node that performs control regarding policies such as quality of service (QoS) for bearers and paying. The HSS is a control node that handles subscriber data and performs service control. Note that, in the NR, these control nodes can be realized as control nodes with different names.

The terminal apparatus 200 is a communication apparatus that communicates with another apparatus. For example, the terminal apparatus 200 can perform uplink communication or downlink communication with the base station 100. The terminal apparatuses 200A and 200B communicate with the base station 100A, the terminal apparatuses 200C and 200D communicate with the base station 100B, and the terminal apparatus 200E communicates with the base station 100A.

Furthermore, the terminal apparatus 200 can communicate with another terminal apparatus 200. The wireless link for communication between the terminal apparatuses 200 is also called a sidelink. For example, the terminal apparatuses 200C and 200D and the terminal apparatuses 200A and 200B perform sidelink communication. The terminal-to-terminal communication may be controlled by the base station 100 or may be autonomously controlled between terminals. That is, mode 1 or mode 3 communication in the 3GPP may be performed, or mode 2 or mode 4 communication may be performed. On the other hand, the terminal apparatuses 200E and 200F are so-called relay nodes. Information can be exchanged by forming a wireless link between the relay nodes. The wireless link between relay nodes is also called a Uu link. Millimeter wave bands such as integrated access and backhaul (IAB) can be used for communication between relay nodes. In the present specification, the terminal-to-terminal communication is a concept that includes communication between relay nodes and between a relay node and the terminal apparatus 200 in addition to communication by a sidelink. The technology related to sidelink communication described below is also applicable to communication between relay nodes and between a relay node and the terminal apparatus 200.

The system 1 described above can be applied to use cases where quality of service (QoS) is required to be guaranteed, such as factory automation, V2X communication, medical communication, gaming and wearable communication. The terminal apparatus 200 may be a smartphone, a car, a medical device, a robot component, or the like.

### <1.2. Technical issues>

In order to achieve low delay in terminal-to-terminal communication, it is desirable to appropriately perform recovery when a communication error occurs. Recovery measures when a communication error occurs include retransmission control (that is, replying with an acknowledgement (ACK) or negative acknowledgement (NACK), and performing retransmission accordingly). In the terminal-to-terminal communication, retransmission control is performed between the terminal apparatuses 200.

There are three types of communication errors described below.

The first communication error is that the receiving side fails to receive. The first communication error is caused by, for example, the failure of decoding or the inability to receive in the first place because transmission is in progress (that is, the restriction of Half duplex). In the following, reception failure refers to a state in which the receiving side succeeds in decoding the control information and recognizes the fact that the packet is transmitted, but fails to decode the data area.

The second communication error is that the transmitting side fails to confirm that the receiving side has succeeded to receive. The second communication error is caused by the fact that the ACK transmitted by the receiving side does not reach the transmitting side, for example.

The third communication error is that the transmitting side fails to confirm that the receiving side has failed to receive. The third communication error is caused by the fact that the NACK transmitted by the receiving side does not reach the transmitting side, for example.

When the first communication error and the third communication error occur, the information notification to the receiving side ends in failure, and therefore it is particularly particularly desirable that recovery be performed. On the other hand, even when the second communication error occurs, the overhead of the entire system 1 increases, but the information notification itself to the receiving side is successful, and therefore it can be said that the recovery priority is low.

In addition, the retransmission control in the terminal-to-terminal communication is performed only between the terminals that are transmitting and receiving, and the control of the system 1 as a whole is not performed. Therefore, it can be said that there is room for improvement in the performance of retransmission control.

### <1.3. Outline of proposed technology>

The present disclosure provides a mechanism that enables appropriate recovery when a communication error occurs, particularly when the first communication error and the third communication error occur. The outline of a proposed technology for that purpose will be described below.

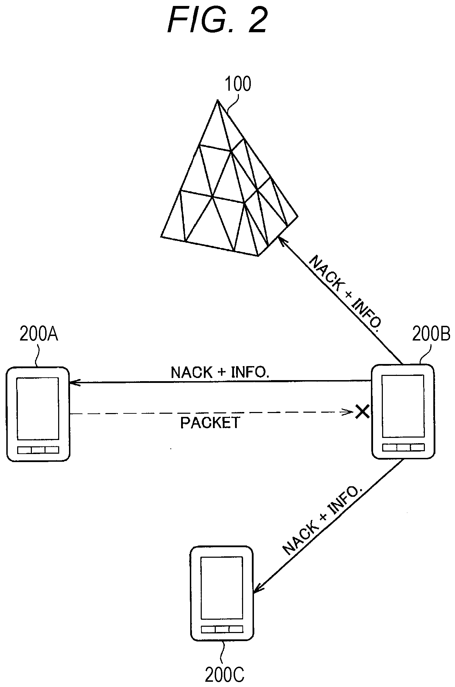

Fig. 2 is a diagram for explaining the outline of the proposed technology. As shown in Fig. 2, the proposed technology involves the base station 100 and a plurality of terminal apparatuses 200 (200A to 200C).

The terminal apparatus 200A is a terminal apparatus 200 that transmits a packet. Hereinafter, the terminal apparatus 200A is also referred to as a transmission terminal 200A. Then, the packet transmitted by the transmission terminal 200A is also referred to as a first packet.

The terminal apparatus 200B is a terminal apparatus 200, which is a destination of the first packet transmitted by the transmission terminal 200A. Hereinafter, the terminal apparatus 200B is also referred to as a reception terminal 200B.

The terminal apparatus 200C is a terminal apparatus 200 other than the transmission terminal 200A or the reception terminal 200B. Hereinafter, the terminal apparatus 200C is also referred to as a peripheral terminal 200C. The peripheral terminal 200C may also be regarded as a terminal apparatus 200 located within a range in which communication with the transmission terminal 200A and the reception terminal 200B is possible. The packet transmitted by the peripheral terminal 200C is also referred to as a second packet. The first packet and the second packet each include different data or control information.

In a case where it is not necessary to distinguish between the transmission terminal 200A, the reception terminal 200B, and the peripheral terminal 200C, these are collectively referred to as the terminal apparatus 200.

In a case where the reception terminal 200B fails to receive the packet transmitted from the transmission terminal 200A, the reception terminal 200B transmits NACK and accompanying information to the transmission terminal 200A, the peripheral terminal 200C and/or the base station 100. On the basis of such accompanying information, the transmission terminal 200A, the peripheral terminal 200C, and/or the base station 100 perform various processing for appropriately performing recovery when the above-mentioned first communication error and/or second communication error occur.

Specifically, regarding the first communication error, in the proposed technology, measures are implemented to improve the probability that the reception terminal 200B succeeds in receiving (that is, decoding) the first packet retransmitted by the transmission terminal 200A. For example, restrictions are imposed on the peripheral terminal 200C regarding the transmission operation of the second packet. Therefore, it becomes possible to reduce interference of the transmission and reception of the retransmitted first packet due to the transmission and reception of the second packet, and as a result, it is possible to improve the probability of successful reception of the retransmitted first packet by the reception terminal 200B. Furthermore, the transmission terminal 200A retransmits the first packet by using transmission parameters instructed by the reception terminal 200B. Therefore, the transmission terminal 200A can more unfailingly perform highly reliable transmission, and as a result, it is possible to improve the probability of successful reception of the retransmitted first packet by the reception terminal 200B.

Regarding the third communication error, in the proposed technology, measures are implemented to improve the probability of successful transmission of the NACK. For example, the peripheral terminal 200C may transmit the NACK on behalf of the reception terminal 200B or in cooperation with the reception terminal 200B. Furthermore, the reception terminal 200B may retransmit the NACK a larger number of times than the ACK. With such configuration, it is possible to improve the probability of successful reception of the NACK by the transmission terminal 200A.

### <<2. Configuration examples>>

### <2.1. Configuration example of base station>

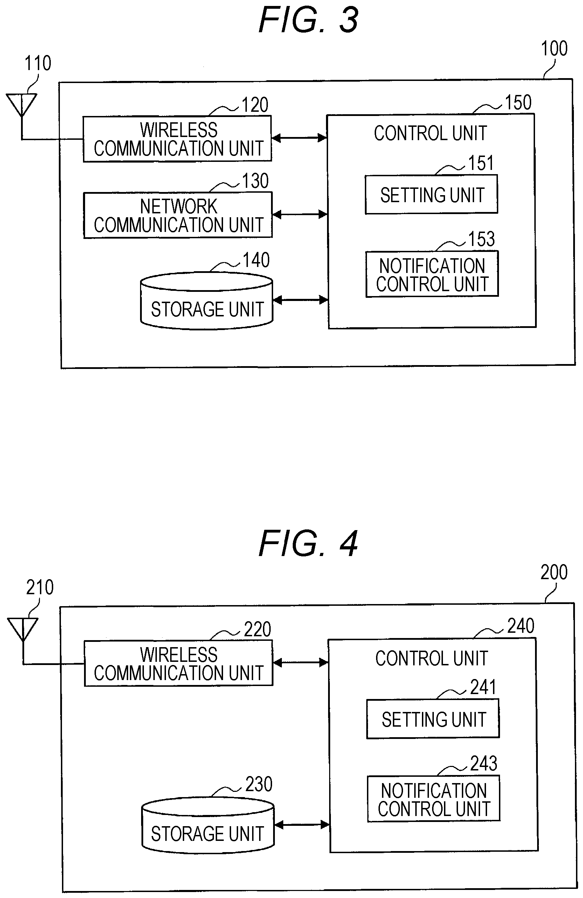

Fig. 3 is a block diagram showing an example of a configuration of the base station 100 according to the present embodiment. Referring to Fig. 3, the base station 100 includes an antenna unit 110, a wireless communication unit 120, a network communication unit 130, a storage unit 140, and a control unit 150.

### (1) Antenna unit 110

The antenna unit 110 radiates a signal output from the wireless communication unit 120 into space as a radio wave. Furthermore, the antenna unit 110 converts the radio wave in the space into a signal and outputs the signal to the wireless communication unit 120.

### (2) Wireless communication unit 120

The wireless communication unit 120 transmits and receives signals. For example, the wireless communication unit 120 transmits a downlink signal to the terminal apparatus and receives an uplink signal from the terminal apparatus.

### (3) Network communication unit 130

The network communication unit 130 transmits and receives information. For example, the network communication unit 130 transmits information to another node and receives information from another node. For example, the another node includes another base station and core network node.

### (4) Storage unit 140

The storage unit 140 temporarily or permanently stores a program and various data for the operation of the base station 100.

### (5) Control unit 150

The control unit 150 controls the entire operation of the base station 100 and provides various functions of the base station 100. The control unit 150 includes a setting unit 151 and a communication control unit 153.

The setting unit 151 has a function of setting various parameters for transmitting and receiving information by the base station 100. The parameters here include, for example, parameters related to resources, transmission power, a modulation scheme, a coding scheme, and/or an antenna and the like that should be used for uplink/downlink communication with the terminal apparatus 200. Furthermore, the setting unit 151 has a function of setting various parameters for communication between the terminal apparatuses 200 by the sidelink. The parameters here include, for example, parameters related to resources, transmission power, a modulation scheme, a coding scheme, and/or an antenna and the like that should be used for communication by the sidelink.

The communication control unit 153 has a function of performing various communication processing using parameters set by the setting unit 151. For example, the communication control unit 153 transmits control information including the parameters set by the setting unit 151 to the terminal apparatus 200.

The control unit 150 can further include other configuration elements other than these configuration elements. That is, the control unit 150 can perform operations other than the operations of these configuration elements.

### <2.2. Configuration example of terminal apparatus>

Fig. 4 is a block diagram showing an example of a configuration of the terminal apparatus 200 according to the present embodiment. Referring to Fig. 4, the terminal apparatus 200 includes an antenna unit 210, a wireless communication unit 220, a storage unit 230, and a control unit 240.

### (1) Antenna unit 210

The antenna unit 210 radiates a signal output from the wireless communication unit 220 into space as a radio wave. Furthermore, the antenna unit 210 converts the radio wave in the space into a signal and outputs the signal to the wireless communication unit 220.

### (2) Wireless communication unit 220

The wireless communication unit 220 transmits and receives signals. For example, the wireless communication unit 220 receives a downlink signal from the base station and transmits an uplink signal to the base station.

### (3) Storage unit 230

The storage unit 230 temporarily or permanently stores a program and various data for the operation of the terminal apparatus 200.

### (4) Control unit 240

The control unit 240 controls the entire operation of the terminal apparatus 200 and provides various functions of the terminal apparatus 200. The control unit 240 includes a setting unit 241 and a communication control unit 243.

The setting unit 241 has a function of setting various parameters for transmitting and receiving information by the terminal apparatus 200. The parameters here include, for example, parameters related to resources, transmission power, a modulation scheme, a coding scheme, and/or an antenna and the like that should be used for uplink/downlink communication with the base station 100. Furthermore, the setting unit 241 has a function of setting various parameters for communication between the terminal apparatuses 200 by the sidelink. The parameters here include, for example, parameters related to resources, transmission power, a modulation scheme, a coding scheme, and/or an antenna and the like that should be used for communication by the sidelink. The setting unit 241 may set the parameters on the basis of the control by the base station 100, may set the parameters on the basis of instructions from another terminal apparatus 200, or may set the parameters on the basis of its own judgment.

The communication control unit 243 has a function of performing various communication processing using parameters set by the setting unit 241. For example, the communication control unit 243 of the transmission terminal 200A receives the ACK/NACK corresponding to the first packet and retransmits the first packet. Furthermore, the communication control unit 243 of the reception terminal 200B transmits the NACK or transmits the accompanying information. Furthermore, the communication control unit 243 of the peripheral terminal 200C imposes restrictions on the transmission of the second packet, or transmits the NACK on behalf of the reception terminal 200B or in cooperation with the reception terminal 200B.

The control unit 240 can further include other configuration elements other than these configuration elements. That is, the control unit 240 can perform operations other than the operations of these configuration elements.

### <<3. Technical features>>

### <3.1. Transmission of NACK and accompanying information>

In a case where the reception terminal 200B fails to receive the packet transmitted by the sidelink from the transmission terminal 200A, the reception terminal 200B transmits the NACK by the sidelink. Moreover, the reception terminal 200B transmits the accompanying information in association with the NACK. The reception terminal 200B can determine whether or not to transmit the accompanying information in association with the NACK on the basis of a predetermined determination criterion. For example, the reception terminal 200B may perform determination according to the packet priority, such as transmitting accompanying information in a case where the packet priority (for example, required QoS level) exceeds a predetermined threshold value, and not transmitting the accompanying information otherwise.

The reception terminal 200B may transmit the NACK a plurality of number of times. In that case, the reception terminal 200B may retransmit the NACK a larger number of times than the ACK. Therefore, it is possible to improve the probability of successful reception of the NACK by the transmission terminal 200A. Since the probability that NACK transmission will occur is low, the effect on overhead is relatively small.

The accompanying information includes at least any of first to fourth accompanying information described below. The contents of the accompanying information and the processing executed on the basis of the accompanying information will be described below in detail. Note that, description will be mainly given below of the technology in a case where the reception terminal 200B fails to receive the first packet and transmits the NACK. However, such technology can be similarly applied to the case where the reception terminal 200B succeeds in receiving the first packet and transmits the ACK.

### <3.1.1. First accompanying information>

The first accompanying information is information for imposing restrictions on the operation of the peripheral terminal 200C (more specifically, packet transmission operation). The reception terminal 200B transmits the first accompanying information in association with the NACK by the sidelink.

When the peripheral terminal 200C receives the NACK and the first accompanying information transmitted from the reception terminal 200B by the sidelink, the peripheral terminal 200C performs communication processing based on the received NACK and first accompanying information. For example, the peripheral terminal 200C performs communication processing under the restrictions indicated by the first accompanying information. The first accompanying information imposes restrictions on the operation of the peripheral terminal 200C, especially the transmission operation of the second packet. By imposing restrictions on the transmission operation of the second packet, it is possible to reduce the interference caused by the transmission and reception of the second packet with respect to the transmission and reception of the retransmitted first packet. Therefore, it is possible to improve the probability that the reception terminal 200B will succeed in receiving the first packet retransmitted by the transmission terminal 200A.

Hereinafter, an example of information that can be included in the first accompanying information will be described. The first accompanying information includes at least one piece of information described below.

### (1) Accompanying information for stopping transmission

The first accompanying information can include information for stopping the transmission of the second packet by the peripheral terminal 200C. Hereinafter, such information will also be referred to as accompanying information for stopping transmission.

The peripheral terminal 200C stops at least a part of the transmission of the second packet according to the accompanying information for stopping transmission. By the amount that the transmission of the second packet is stopped, the interference caused by the transmission and reception of the second packet with respect to the transmission and reception of the retransmitted first packet is eliminated. Therefore, it is possible to improve the probability that the reception terminal 200B will succeed in receiving the first packet retransmitted by the transmission terminal 200A.

The accompanying information for stopping transmission can include information instructing stopping transmission of the second packet. In a case where the peripheral terminal 200C receives such information, the peripheral terminal 200C entirely stops transmission of the second packet (that is, the second packet is not transmitted).

The accompanying information for stopping transmission can include information instructing a period for which the transmission of the second packet should be stopped. The information instructing how long the transmission of the second packet should be stopped can include at least one of start time, end time, or the length of the period for which the transmission of the second packet should be stopped. The peripheral terminal 200C stops transmission of the second packet for the instructed period.

The accompanying information for stopping transmission can include information instructing a resource for which the transmission of the second packet should be stopped. The resource here is frequency resource and/or time resource. For example, a resource pool, subresource pool, or frequency band can be instructed as a resource for which the transmission of the second packet should be stopped. The peripheral terminal 200C stops transmission of the second packet using the instructed resource.

The accompanying information for stopping transmission can include information instructing the peripheral terminal 200C for which the transmission of the second packet should be stopped. The information instructing the peripheral terminal 200C for which transmission of the second packet should be stopped can include the identification information of the peripheral terminal 200C for which the transmission of the second packet should be stopped. The peripheral terminal 200C stops the transmission of the second packet in a case where it is the peripheral terminal 200C for which the transmission of the second packet should be stopped. Furthermore, the identification information of the peripheral terminal 200C for which the transmission of the second packet should be stopped may be identification information of a group of the peripheral terminals 200C for which the transmission of the second packet should be stopped. For example, the terminal apparatuses 200 are grouped in advance on the basis of conditions regarding terminal class, transmittable QoS, or the like. Furthermore, the accompanying information for stopping transmission may be group cast to the group of the peripheral terminals 200C for which the transmission of the second packet should be stopped. That is, the accompanying information for stopping transmission may be transmitted only to the group of the peripheral terminals 200C for which the transmission of the second packet should be stopped.

The accompanying information for stopping transmission can include information instructing the priority of the second packet whose transmission should be stopped. The peripheral terminal 200C stops the transmission of the second packet having the instructed priority or a priority lower than the instructed priority. The information instructing the priority of the second packet whose transmission should be stopped may be information indicating the required QoS level of the first packet to be retransmitted. In that case, the peripheral terminal 200C stops the transmission of the second packet having the same or lower QoS level as or than the required QoS level of the first packet to be retransmitted.

The accompanying information for stopping transmission can include information instructing a geographic area for which the transmission of the second packet should be stopped. The peripheral terminal 200C stops transmission of the second packet in a case where it is located within the instructed geographic area. As such geographic area, a zone defined by the base station 100 (e.g., cell 11) may be used. Furthermore, the information instructing the geographic area for which the transmission of the second packet should be stopped may be transmitted to the base station 100 by the uplink and transferred to the peripheral terminal 200C located in the cell of an adjacent base station 100.

The accompanying information for stopping transmission can include information instructing to perform the reception operation instead of the transmission operation. The peripheral terminal 200C performs the reception operation according to the instruction.

### (2) Accompanying information for transmission power control

The first accompanying information can include information for controlling the transmission power used for transmission of the second packet by the peripheral terminal 200C. Hereinafter, such information will also be referred to as accompanying information for transmission power control.

The accompanying information for transmission power control can include information instructing the transmission power to be used or an upper limit of the transmission power to be used. The peripheral terminal 200C transmits the second packet using the instructed transmission power or the transmission power below the instructed upper limit. The accompanying information for transmission power control may include information instructing the transmission power to be used for each packet priority or an upper limit of the transmission power to be used.

According to the accompanying information for transmission power control, the transmission power used for transmission of the second packet is limited, and therefore it is possible to improve the probability of succeeding the reception of the first packet retransmitted by the transmission terminal 200A by the reception terminal 200B. On the other hand, since the peripheral terminal 200C is allowed to transmit the second packet, it is possible to secure the throughput of the entire system 1.

### (3) Accompanying information for multiplexing scheme control

The first accompanying information can include information for controlling a multiplexing scheme used for transmission of the second packet by the peripheral terminal 200C. Hereinafter, such information will also be referred to as accompanying information for multiplexing scheme control.

The accompanying information for multiplexing scheme control may include an instruction to switch from an orthogonal multiplexing scheme to a non-orthogonal multiplexing scheme. The peripheral terminal 200C transmits the second packet using the instructed non-orthogonal multiplexing scheme. The accompanying information for multiplexing scheme control can include, for example, the identification information of the non-orthogonal multiplexing scheme of a switching destination. Furthermore, the accompanying information for multiplexing scheme control can include information instructing a multiple access signature (MA signature) that should be used or an available MA signature.

According to the accompanying information for multiplexing scheme control, the non-orthogonal multiplexing scheme will be used to transmit the second packet. Therefore, for example, even in a case where a hidden terminal problem occurs, interference can be prevented because the same orthogonal resource is not used for the retransmission of the first packet and the transmission of the second packet. Thus, it is possible to improve the probability that the reception terminal 200B will succeed in receiving the first packet retransmitted by the transmission terminal 200A.

### (4) Supplement

The first accompanying information may include detailed information (for example, information indicating the frequency and time of the resource). Furthermore, the first accompanying information may be a command. For example, a command and processing to be executed in response to the command can be set by the base station 100 or in advance. Then, in a case where the peripheral terminal 200C receives the command as the first accompanying information, the peripheral terminal 200C executes processing corresponding to the received command. For example, in a case where the peripheral terminal 200C receives the command "1", the peripheral terminal 200C stops the transmission of the second packet for a predetermined period.

### <3.1.2. Second accompanying information>

The second accompanying information is information for controlling the retransmission of the first packet by the transmission terminal 200A. The reception terminal 200B transmits the second accompanying information in association with the NACK by the sidelink.

When the transmission terminal 200A receives the NACK and the second accompanying information transmitted from the reception terminal 200B by the sidelink, the transmission terminal 200A performs retransmission control of the first packet on the basis of the received NACK and second accompanying information. For example, the transmission terminal 200A sets transmission parameters corresponding to the second accompanying information and retransmits the first packet. It is desirable that the transmission terminal 200A perform highly reliable transmission in order to avoid a reception failure of the first packet by the reception terminal 200B at the time of retransmission. In this respect, the transmission terminal 200A can more unfailingly perform highly reliable transmission by setting the transmission parameters on the basis of the second accompanying information fed back from the reception terminal 200B. Therefore, it is possible to improve the probability of successful reception of the retransmitted first packet.

Hereinafter, an example of information that can be included in the second accompanying information will be described. The second accompanying information includes at least one piece of information described below.

### • Information instructing a resource

The second accompanying information can include information instructing a resource that should be used for retransmission of the first packet by the transmission terminal 200A. The resource here is frequency resource and/or time resource. For example, a resource pool, subresource pool, or frequency band can be instructed as a resource that should be used for retransmission of the first packet. The transmission terminal 200A retransmits the first packet using the instructed resource.

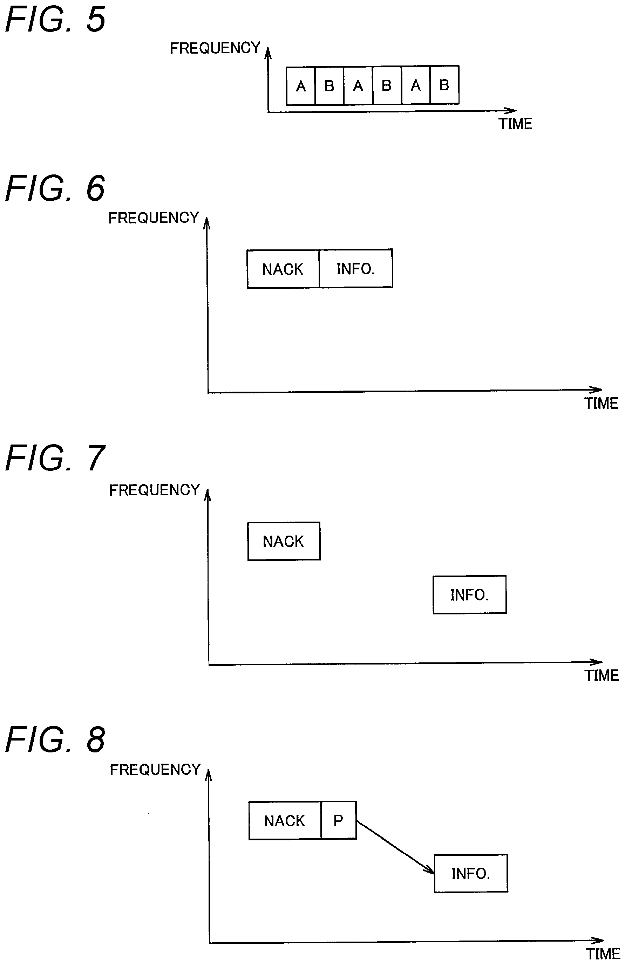

In a case where the transmission terminal 200A is set with a pre-patterned resource, the second accompanying information can include information indicating a resource pattern that should be used for the retransmission of the first packet. An example of such a resource pattern will be described with reference to Fig. 5. Fig. 5 is a diagram showing an example of a resource pattern that can be used for retransmission of the first packet by the transmission terminal 200A according to the present embodiment. The horizontal axis of the graph shown in Fig. 5 is time, the vertical axis is frequency, and the rectangle in the graph is resource. Two time-division resource patterns are shown: a resource pattern including a plurality of resources marked with "A" and a resource pattern including a plurality of resources marked with "B".

### • Information instructing transmission power

The second accompanying information can include information instructing transmission power that should be used for retransmission of the first packet by the transmission terminal 200A. Such information includes, for example, information instructing power boosting, information instructing boost width, or a transmit power control (TPC) command. The transmission terminal 200A retransmits the first packet using the instructed transmission power.

### • Information instructing modulation scheme and/or coding scheme

The second accompanying information can include information instructing a modulation scheme and/or a coding scheme that should be used for retransmission of the first packet by the transmission terminal 200A. Such information may include, for example, information that directly instructs a modulation and coding scheme (MCS) that should be used (for example, MCS index), or may include information indicating a candidate for an MCS to be used (for example, the range of the MCS index). The transmission terminal 200A retransmits the first packet using the instructed modulation scheme and/or coding scheme.

### - Information instructing antenna

The second accompanying information can include information instructing an antenna that should be used for retransmission of the first packet by the transmission terminal 200A. Such information can include, for example, information indicating the number of antennas that should be used. The transmission terminal 200A retransmits the first packet using the instructed antenna.

### • Information instructing the number of times of repetitive transmission

The second accompanying information can include information instructing the number of times of repetition of the retransmission of the first packet (that is, the number of times of retransmission) by the transmission terminal 200A. The transmission terminal 200A repeatedly retransmits the first packet the instructed number of times.

### • Information instructing required QoS level

The second accompanying information can include information indicating the required QoS level of the first packet to be retransmitted. The required QoS level can be defined by QoS class identifier (QCI), signal-to-interference plus noise power ratio (SINR) or signal-to-noise ratio (SNR) at the time of receiving the first packet. For example, the required QoS level of the first packet to be retransmitted is set to a higher QoS level than at the time of initial transmission. Therefore, it is possible to improve the probability of successful reception at the time of retransmission. The transmission terminal 200A sets transmission parameters so as to satisfy the required QoS level, and retransmits the first packet. The transmission parameters here include at least one of parameters that can be set on the basis of the second accompanying information described above, such as resources, transmission power, a modulation scheme, a coding scheme, an antenna, the number of times of repetitive transmission, or the like, for example.

### • Supplement

The second accompanying information may include detailed information (for example, information indicating the frequency and time of the resource). Furthermore, the second accompanying information may be a command. For example, a command and processing to be executed in response to the command can be set by the base station 100 or in advance. Then, in a case where the transmission terminal 200A receives the command as the second accompanying information, the transmission terminal 200A executes processing corresponding to the received command. For example, in a case where the transmission terminal 200A receives the command "2", the transmission terminal 200A sets the number of times of repetitive transmission of the first packet to a predetermined number.

### <3.1.3. Third accompanying information>

The third accompanying information is information that requests the base station 100 to perform control for the retransmission of the first packet. The reception terminal 200B transmits the NACK to the base station 100 by the uplink, and transmits the third accompanying information by the uplink in association with the NACK.

When the base station 100 receives the NACK and the third accompanying information transmitted from the reception terminal 200B by the uplink, the base station 100 controls the sidelink communication on the basis of the received NACK and third accompanying information. For example, the base station 100 controls transmission and reception processing by the sidelink by the transmission terminal 200A, the reception terminal 200B, and/or the peripheral terminal 200C. Specifically, the base station 100 sets parameters such as resources, transmission power, a modulation scheme, a coding scheme, and/or an antenna and the like that should be used for transmission and reception of the first packet and/or the second packet. The contents of the parameters to be set may be instructed by the reception terminal 200B in the third accompanying information, or may be determined by the base station 100 on the basis of the third accompanying information.

By controlling the sidelink communication by the base station 100, it is possible to optimize the entire system 1. For example, the base station 100 can stop the transmission of the second packet only with respect to the peripheral terminal 200C that can interfere with the retransmission of the first packet. Furthermore, for example, the base station 100 can set the transmission parameter according to the communication situation of the peripheral terminal 200C in the transmission terminal 200A and retransmit the first packet.

The third accompanying information can include the first accompanying information described above. That is, the reception terminal 200B can transmit the first accompanying information in association with the NACK by the uplink. The base station 100 controls the communication processing of the peripheral terminal 200C on the basis of the first accompanying information. For example, the base station 100 may transfer the first accompanying information to the peripheral terminal 200C. Furthermore, the base station 100 may instruct the transmission stop of the second packet, control the transmission power of the second packet, and/or control a multiplexing scheme of the second packet on the basis of the first accompanying information.

The third accompanying information can include the second accompanying information described above. That is, the reception terminal 200B can transmit the second accompanying information in association with the NACK by the uplink. The base station 100 controls the retransmission processing of the transmission terminal 200A on the basis of the second accompanying information. For example, the base station 100 may transfer the second accompanying information to the transmission terminal 200A. Furthermore, the base station 100 may set the transmission parameter that should be used for the retransmission of the first packet in the transmission terminal 200A on the basis of the second accompanying information.

Note that in a case where the transmission terminal 200A, the reception terminal 200B, and/or the peripheral terminal 200C are located at the cell edge, the base station 100 transfers the third accompanying information to an adjacent base station 100 or notifies the adjacent base station 100 of the control contents based on the third accompanying information. Therefore, the transmission terminal 200A, the reception terminal 200B, and/or the peripheral terminal 200C located at the cell edge can also receive appropriate control.

The third accompanying information may include detailed information (for example, information indicating the frequency and time of the resource). Furthermore, the third accompanying information may be a command. For example, a command and processing to be executed in response to the command can be set by the base station 100 or in advance. Then, in a case where the base station 100 receives the command as the third accompanying information, the base station 100 executes processing corresponding to the received command. For example, in a case where the base station 100 receives the command "3", the sidelink communication by the peripheral terminal 200C is stopped for a predetermined period.

### <3.1.4. Fourth accompanying information>

The fourth accompanying information is information for causing the peripheral terminal 200C to transmit the NACK. The reception terminal 200B transmits the fourth accompanying information in association with the NACK by the sidelink.

When the peripheral terminal 200C receives the NACK and the fourth accompanying information transmitted from the reception terminal 200B by the sidelink, the peripheral terminal 200C performs communication processing based on the received NACK and fourth accompanying information. For example, the peripheral terminal 200C, on the basis of the fourth accompanying information, transmits the NACK indicating that the reception terminal 200B has failed to receive the first packet to the transmission terminal 200A by the sidelink on behalf of the reception terminal 200B or in cooperation with the reception terminal 200B. Hereinafter, each communication processing will be described in detail.

### (1) NACK proxy transmission

The fourth accompanying information can include information requesting NACK proxy transmission to the peripheral terminal 200C. When the peripheral terminal 200C receives the fourth accompanying information including such information, the peripheral terminal 200C transmits the NACK by the sidelink instead of the reception terminal 200B. In this case, since the reception terminal 200B does not have to retransmit the NACK, the load on the reception terminal 200B is reduced. Furthermore, even in a case where it is difficult to deliver the NACK directly from the reception terminal 200B to the transmission terminal 200A due to the positional relationship between the transmission terminal 200A and the reception terminal 200B, the interference situation, or the like, it is possible to improve the probability of successful reception of the NACK by the transmission terminal 200A.

The reception terminal 200B determines whether or not to ask proxy transmission, and in a case where the reception terminal 200B determines that it should ask proxy transmission, transmits the fourth accompanying information including information requesting proxy transmission. The determination as to whether or not to ask proxy transmission can be determined on the basis of various parameters. The parameter can include the priority, importance, or required QoS level of the first packet. The parameter can include the request delay information of the first packet or the number of times of repetition at the time of retransmission. The parameter can include channel occupancy ratio (CR) indicating how much resource is occupied for the transmission of the first packet in the band or channel busy ratio (CBR) indicating the congestion degree information of the band. The parameter can include transmission path information between the transmission terminal 200A and the reception terminal 200B, path loss information, or reference signal received power (RSRP) or reference signal received quality (RSRQ) of the first packet at the reception terminal 200B. The parameter can include relative position information between the transmission terminal 200A and the reception terminal 200B, or respective position information. The parameter can include the number of peripheral terminals 200C. The parameter can include the remaining battery amount of the reception terminal 200B.

The reception terminal 200B may notify each peripheral terminal 200C of information instructing a resource that should be used for retransmission of the NACK, and the peripheral terminals 200C may retransmit the NACK using the instructed resources. Therefore, the peripheral terminals 200C retransmit the NACKs using different resources, and thus it is possible to prevent the collision of the retransmitted NACKs.

The reception terminal 200B notifies the peripheral terminal 200C of information instructing candidates of a resource that can be used for retransmission of the NACK, and the peripheral terminal 200C may select an arbitrary resource from the instructed resource candidates and uses it for the retransmission of the NACK. Furthermore, the reception terminal 200B may randomly select a resource and retransmit the NACK. In these cases, the resources used for the retransmission can be made less likely to be duplicated.

The reception terminal 200B may give a notification of the information instructing the period for which the NACK should be retransmitted. In that case, the peripheral terminal 200C performs retransmission for the instructed period.

The information instructing the resource that should be used for the retransmission of the NACK, the information instructing the candidates of the resource that can be used for the retransmission of the NACK, and the information instructing the period over which the NACK should be retransmitted may be included in the fourth accompanying information or may be notified in advance.

### (2) CoMP transmission

The fourth accompanying information can include information requesting the peripheral terminal 200C to perform coordinated multi-point (CoMP) transmission of the NACK. When the peripheral terminal 200C receives the fourth accompanying information including such information, the peripheral terminal 200C performs the CoMP transmission of the NACK in cooperation with the reception terminal 200B. In this case, the NACK is received by the transmission terminal 200A with a higher reception power than in a case where the reception terminal 200B transmits the NACK by itself. Therefore, it is possible to improve the probability of successful reception of the NACK by the transmission terminal 200A.

The fourth accompanying information includes information for causing the peripheral terminal 200C to transmit the NACK using the same resource as the reception terminal 200B. Specifically, the fourth accompanying information includes information indicating the resource used by the reception terminal 200B to retransmit the NACK. Moreover, the fourth accompanying information may include information indicating a resource offset for absorbing the difference in the relative positional relationship between the peripheral terminal 200C and the reception terminal 200B with respect to the transmission terminal 200A. Therefore, the peripheral terminal 200C can transmit the NACK with the same resource as the resource used when the reception terminal 200B retransmits the NACK, realizing the CoMP transmission.

Hereinafter, an example of the flow of the CoMP transmission based on the fourth accompanying information will be described.

First, the reception terminal 200B transmits the NACK and the fourth accompanying information. It is assumed that the peripheral terminal 200C has failed to receive the NACK because the SINR is low. On the other hand, it is assumed that the peripheral terminal 200C has succeeded to receive the NACK and the fourth accompanying information because the distance between the terminals is relatively short. The peripheral terminal 200C decodes the fourth accompanying information and recognizes the resource used for the retransmission of the NACK.

The reception terminal 200B retransmits the NACK with a resource displaced in the time axis direction from the first retransmission of the NACK. At this time, the peripheral terminal 200C transmits the NACK with the same resource as the resource used when the reception terminal 200B retransmits the NACK. Then, the transmission terminal 200A receives the NACK from the reception terminal 200B and the NACK from the peripheral terminal 200C with the same resource. Therefore, because the SINR is improved, the transmission terminal 200A succeeds in receiving the NACK.

### (3) Supplement

The fourth accompanying information may include detailed information (for example, information indicating the frequency and time of the resource). Furthermore, the fourth accompanying information may be a command. For example, a command and processing to be executed in response to the command can be set by the base station 100 or in advance. Then, in a case where the peripheral terminal 200C receives the command as the fourth accompanying information, the peripheral terminal 200C executes processing corresponding to the received command. For example, in a case where the peripheral terminal 200C receives the command "4", the peripheral terminal 200C recognizes the resource after a predetermined time at the same frequency as the resource used for the initial NACK transmission as the NACK retransmission resource and uses it for the CoMP transmission of the NACK.

### <3.1.5. Method of transmitting accompanying information>

The method of giving a notification of the above-mentioned accompanying information (first to fourth accompanying information) will be described below.

### (1) Explicit notification

A notification of the accompanying information may be explicitly given. The explicit notification is achieved by transmitting the accompanying information using a resource for transmitting the accompanying information.

Figs. 6 to 8 are diagrams for explaining an example of the method of setting a resource for transmitting the accompanying information. In Figs. 6 to 8, the horizontal axis of the graph shown is time, the vertical axis is frequency, and the rectangle in the graph is resource. The rectangle labeled "NACK" is the resource used to transmit the NACK. The rectangle labeled "INFO." is the resource used to transmit the accompanying information. The rectangle labeled "P" is the resource used to transmit information indicating the resource location of the accompanying information.

As shown in Fig. 6, the accompanying information may be transmitted at the same frequency as the NACK and with a resource of time adjacent to (that is, following) the resource with which the NACK is transmitted. In other words, the NACK resources may be expanded in the time direction and the accompanying information may be stored in an expanded area. In this case, when the transmission terminal 200A receives the NACK, the transmission terminal 200A also monitors the resources that follow in time and obtains the accompanying information.

As shown in Fig. 7, the resource used to transmit the accompanying information does not have to be adjacent to the NACK temporally and in terms of frequency. For example, the resources used to transmit the accompanying information may be preset. In addition, the resource used to transmit the accompanying information may be a resource having a preset relative positional relationship with respect to the resource used for transmission of the NACK. In these cases, the transmission terminal 200A decodes the resource used to transmit the accompanying information by using the reception of the NACK as a trigger to obtain the accompanying information.

As shown in Fig. 8, the resource used to transmit the accompanying information may be notified to the transmission terminal 200A by the information indicating the resource location of the accompanying information. In this case, when the transmission terminal 200A first receives the NACK, the transmission terminal 200A also monitors the resources that follow in time and obtains the information indicating the resource location of the accompanying information. Then, the transmission terminal 200A monitors the resource indicated by the information indicating the resource location of the accompanying information, and obtains the accompanying information.

### (2) Implicit notification

A notification of the accompanying information may be implicitly given. The implicit notification is realized by transmitting the NACK by a method corresponding to the accompanying information.

The accompanying information may be represented by a resource pattern used to transmit a plurality of NACKs. In this case, the reception terminal 200B transmits a plurality of NACKs using the resource pattern according to the accompanying information. Then, the transmission terminal 200A recognizes the accompanying information on the basis of the resource pattern with which the plurality of NACKs has been received. The correspondence between the resource pattern and the accompanying information can be set by the base station 100 or in advance.

The resource pattern used to transmit the plurality of NACKs can be defined by various parameters such as the number of resources (i.e., the number of NACKs), the frequency position of the resource, the time position of the resource, the frequency interval between resources, and/or the time interval between resources. Furthermore, the resource pattern used to transmit the plurality of NACKs can be defined by the positional relationship of time and/or frequency with the resource used to transmit the first packet.

As an example, description is given of the example in which a notification of the information instructing the required QoS level within the second accompanying information is implicitly given. The reception terminal 200B transmits a plurality of NACKs using a resource having a pattern according to the information indicating the required QoS level of the first packet. For example, the higher the required QoS level, the shorter the time interval from the reception of the first packet to the NACK transmission. Furthermore, the higher the required QoS level, the more NACKs may be transmitted. The transmission terminal 200A recognizes the information indicating the required QoS level of the first packet on the basis of the pattern of the resource with which the NACK has been received.

The implicit accompanying information notification method described above may be used not only for notification of the accompanying information from the reception terminal 200B to the transmission terminal 200A, but also for notification of the accompanying information from the reception terminal 200B to the peripheral terminal 200C.

### <3.2. Correspondence between first packet and ACK/NACK>

In the present embodiment, the transmission terminal 200A can receive one or more ACKs/NACKs. Therefore, it is desirable that the transmission terminal 200A can recognize which first packet the received ACK/NACK corresponds to. An example of the method for that will be described below.

### (1) Recognition based on resource

The reception terminal 200B may transmit the ACK/NACK with the resource associated with the first packet that has succeeded/failed to be received. Furthermore, in a case where the peripheral terminal 200C transmits the ACK/NACK on behalf of the reception terminal 200B or in cooperation with the reception terminal 200B, the peripheral terminal 200C may transmit the ACK/NACK with the resource associated with the first packet that the reception terminal 200B has succeeded/failed to receive. In this case, the transmission terminal 200A can recognize which ACK/NACK corresponding to which first packet the received ACK/NACK corresponds to on the basis of the resource with which the ACK/NACK has been received.

An example of recognizing the corresponding first packet on the basis of the resource used to transmit the ACK/NACK will be described below.

### • In a case where the setting subject of a resource for the ACK/NACK is the transmission terminal 200A

### - In a case where there is one terminal apparatus 200 that transmits the ACK/NACK

The transmission terminal 200A sets a sidelink resource that should be used for transmitting the ACK/NACK corresponding to the first packet to be transmitted, and transmits information indicating the resource to the reception terminal 200B. The resource may be a resource pool having a certain width.

The resource set by the transmission terminal 200A is set with respect to the reception terminal 200B and used by the reception terminal 200B. Specifically, the reception terminal 200B transmits the ACK/NACK using the sidelink resource set corresponding to the first packet that has succeeded/failed to be received.

The transmission terminal 200A performs monitoring with the set resource and receives the ACK/NACK corresponding to the transmitted first packet. Therefore, the transmission terminal 200A recognizes success/failure of reception of the transmitted first packet by the reception terminal 200B.

### - In a case where there is a plurality of terminal apparatuses 200 that transmits the ACK/NACK

The transmission terminal 200A sets a sidelink resource that should be used for transmitting the ACK/NACK corresponding to the first packet to be transmitted, and transmits information indicating the resource to the reception terminal 200B. The resource is a resource pool that can be used to transmit a plurality of ACKs/NACKs.

The resource set by the transmission terminal 200A is set with respect to the reception terminal 200B and/or the peripheral terminal 200C, and is used by the reception terminal 200B and/or the peripheral terminal 200C. Specifically, when the reception terminal 200B receives the information indicating the resource pool that should be used for transmission of the ACK/NACK, the reception terminal 200B notifies the peripheral terminal 200C of such information. Then, the reception terminal 200B transmits the ACK/NACK using the resource selected from the resource pool of sidelinks set corresponding to the first packet that has succeeded/failed to be received. Furthermore, the peripheral terminal 200C transmits the ACK/NACK using the resource selected from the resource pool of the sidelinks set corresponding to the first packet that the reception terminal 200B has succeeded/failed to receive.

The transmission terminal 200A monitors the set resource pool and receives the ACK/NACK corresponding to the transmitted first packet. The transmission terminal 200A determines that the plurality of ACKs/NACKs received in the set resource pool is the ACKs/NACKs corresponding to the transmitted first packet. Therefore, the transmission terminal 200A recognizes success/failure of reception of the transmitted first packet by the reception terminal 200B.

### • In a case where the setting subject of a resource for the ACK/NACK is the reception terminal 200B

The transmission terminal 200A and the reception terminal 200B set resources that can be used for ACK/NACK transmission. The resources that can be used for ACK/NACK transmission are associated with the first packet transmitted from the transmission terminal 200A. The resources that can be used for ACK/NACK transmission may be set in advance, or may be set by the transmission terminal 200A and notified to the reception terminal 200B.

The reception terminal 200B selects a resource to be used to transmit the ACK/NACK from the resources that can be used for transmission of the set ACK/NACK, and transmits the ACK/NACK using the selected resource. In a case where the reception terminal 200B causes the peripheral terminal 200C to transmit the ACK/NACK, the reception terminal 200B notifies the peripheral terminal 200C of the information indicating resources that can be used for the ACK/NACK transmission. Then, the peripheral terminal 200C selects a resource to be used to transmit the ACK/NACK from the resources that can be used for transmission of the ACK/NACK, and transmits the ACK/NACK using the selected resource.

The transmission terminal 200A monitors all the resources available for transmission of the ACK/NACK, and receives the ACK/NACK corresponding to the transmitted first packet. The transmission terminal 200A determines that the plurality of ACKs/NACKs received with the resource that can be used to transmit the ACKs/NACKs is the ACKs/NACKs corresponding to the transmitted first packet. Therefore, the transmission terminal 200A recognizes success/failure of reception of the transmitted first packet by the reception terminal 200B.

### (2) Recognition based on identification information

The reception terminal 200B may transmit the identification information of the first packet that has succeeded/failed to be received in association with the ACK/NACK. Furthermore, in a case where the peripheral terminal 200C transmits the ACK/NACK on behalf of the reception terminal 200B or in cooperation with the reception terminal 200B, the peripheral terminal 200C may transmit the identification information of the first packet that the reception terminal 200B has succeeded/failed to receive in association with the ACK/NACK. In this case, the transmission terminal 200A can recognize which ACK/NACK corresponding to which first packet the received ACK/NACK corresponds to on the basis of the identification information of the first packet associated with the ACK/NACK.

The recognition based on the identification information can be performed in a case where the setting subject for the resource of the ACK/NACK is the transmission terminal 200A and in a case where the setting subject for the resource of the ACK/NACK is the reception terminal 200B. In addition, the recognition based on the identification information can also be applied in a case where the setting subject for the resource of the ACK/NACK is the peripheral terminal 200C. This point will be described below.

The peripheral terminal 200C sets the resource for transmission of the ACK/NACK on behalf of the reception terminal 200B or in cooperation with the reception terminal 200B. Then, the peripheral terminal 200C transmits the ACK/NACK with the set resource.

At this time, the peripheral terminal 200C adds the identification information of the first packet that the reception terminal 200B has succeeded/failed to receive to the ACK/NACK and transmits the ACK/NACK. Therefore, the transmission terminal 200A can recognize which ACK/NACK corresponding to which first packet the ACK/NACK corresponds to.

### <3.3. Retransmission of first packet>

The transmission terminal 200A transmits the first packet to the reception terminal 200B by the sidelink. Then, in a case where the terminal apparatus 200 receives the NACK indicating that the reception terminal 200B has failed to receive the first packet, the terminal apparatus 200 retransmits the first packet by the sidelink.

At that time, the transmission terminal 200A may perform retransmission control on the basis of a rule defined in advance. The rule here may be, for example, a transmission parameter that should be used for retransmission of the first packet. The rule can be set by the base station 100 or in advance.

Furthermore, in a case where the transmission terminal 200A receives the second accompanying information, the transmission terminal 200A may perform retransmission control on the basis of the received second accompanying information. For example, the transmission terminal 200A retransmits the first packet using the transmission parameters instructed in the second accompanying information.

Furthermore, the transmission terminal 200A may perform the retransmission control on the basis of the control by the base station 100 based on the third accompanying information. For example, the transmission terminal 200A retransmits the first packet using the transmission parameter instructed by the base station 100.

### <3.4. Flow of processing>

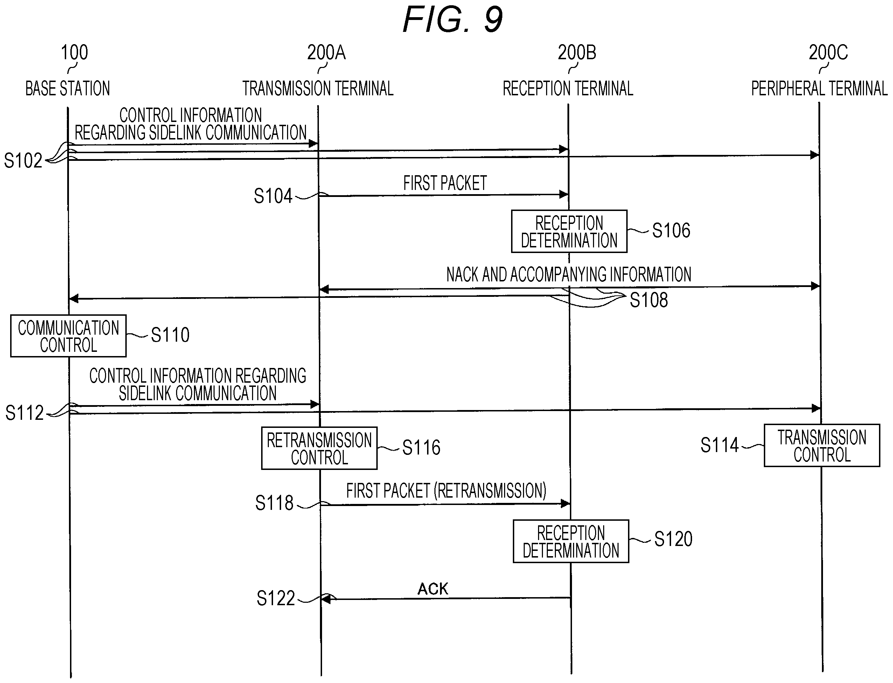

Hereinafter, the flow of processing executed in the system 1 according to the present embodiment will be described with reference to Figs. 9 to 12.

### (1) Overall flow of processing

Fig. 9 is a sequence diagram showing an example of flow of processing executed in the system 1 according to the present embodiment. The base station 100, the transmission terminal 200A, the reception terminal 200B, and the peripheral terminal 200C are involved in this sequence.

As shown in Fig. 9, first, the base station 100 transmits the control information regarding the sidelink communication to the transmission terminal 200A, the reception terminal 200B, and the peripheral terminal 200C (step S102). Such control information sets various parameters such as resources, transmission power, a modulation scheme, a coding scheme, and/or an antenna and the like that should be used for transmission and reception by the sidelink. The resource here may be a resource pool, a resource block, or the like. Furthermore, parameters relating to the resource can include setting of resources for synchronization signals, setting of resources for control signals, setting of resources for data signals, and/or setting of reference signals.

Next, the transmission terminal 200A transmits the first packet according to the control information regarding the sidelink communication (step S104). At this time, the transmission terminal 200A incorporates information indicating the priority, importance, or required QoS of the first packet and the like into the control information and transmits the first packet.

Next, the reception terminal 200B determines the reception of the first packet (step S106). Here, it is assumed that the reception terminal 200B has determined that the reception of the first packet has failed. Thus, the reception terminal 200B transmits the NACK and the accompanying information (step S108). Specifically, the reception terminal 200B transmits the NACK and the first accompanying information to the peripheral terminal 200C by the sidelink. Furthermore, the reception terminal 200B transmits the NACK and the second accompanying information to the transmission terminal 200A by the sidelink. Furthermore, the reception terminal 200B transmits the NACK and the third accompanying information to the base station 100 by the uplink. Furthermore, the reception terminal 200B transmits the NACK and the fourth accompanying information to the peripheral terminal 200C by the sidelink. The reception terminal 200B may retransmit the NACK and the accompanying information a plurality of times.

Next, the base station 100 performs sidelink communication control for retransmitting the first packet on the basis of the received third accompanying information (step S110). Then, the base station 100 transmits the control information related to the sidelink communication to the transmission terminal 200A and the peripheral terminal 200C (step S112). For example, the base station 100 sets parameters for retransmission of the first packet by the transmission terminal 200A, and sets parameters for transmission of the second packet by the peripheral terminal 200C.

Next, the peripheral terminal 200C controls the transmission of the second packet (step S114). Specifically, the peripheral terminal 200C transmits the second packet under the restrictions indicated by the first accompanying information and/or on the basis of the control by the base station 100 based on the third accompanying information. For example, the peripheral terminal 200C transmits the second packet/or stops the transmission of the second packet by using the transmission parameter indicated by the first accompanying information or instructed by the base station 100. Furthermore, the peripheral terminal 200C may transmit the NACK on behalf of the reception terminal 200B or in cooperation with the reception terminal 200B on the basis of the fourth accompanying information.

Next, the transmission terminal 200A controls retransmission of the first packet (step S116). Specifically, the transmission terminal 200A retransmits the first packet on the basis of the control by the base station 100 based on the second accompanying information and/or the third accompanying information (step S118). For example, the transmission terminal 200A retransmits the first packet using the transmission parameter indicated by the second accompanying information or instructed by the base station 100.

Next, the reception terminal 200B determines the reception of the retransmitted first packet (step S120). Here, it is assumed that the reception terminal 200B has determined that the reception of the first packet is successful. Therefore, the reception terminal 200B transmits the ACK to the transmission terminal 200A (step S122) .

An example of the overall flow of processing has been described heretofore.

Note that, in the case of relay nodes, in the sequence described above, the transmission terminal 200A is replaced with a transmission relay node, the reception terminal 200B is replaced with a reception relay node, and the peripheral terminal 200C is replaced with a peripheral relay node. Furthermore, the sidelink in step S102 is replaced with a Uu link.

### (2) Flow of processing in the reception terminal 200B

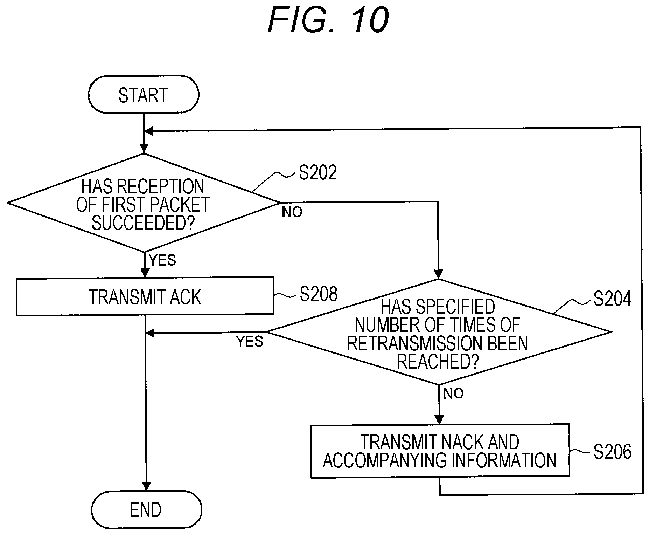

Fig. 10 is a flowchart showing an example of flow of processing executed in the reception terminal 200B according to the present embodiment.

As shown in Fig. 10, first, the reception terminal 200B determines whether or not the reception of the first packet is successful (step S202). In a case where it is determined that the reception of the first packet has failed (step S202/NO), the reception terminal 200B determines whether or not the number of times of retransmission of the NACK has reached the specified number of times of retransmission (step S204). In a case where it is determined that the specified number of times of retransmission has not been reached (step S204/NO), the reception terminal 200B transmits the NACK and the accompanying information (step S206). Thereafter, the processing returns back to step S202. On the other hand, in a case where it is determined that the specified number of times of retransmission has been reached (step S204/YES), the reception terminal 200B stops the retransmission of the NACK and ends the processing.

In a case where it is determined in step S202 that the first packet has been successfully received (step S202/YES), the reception terminal 200B transmits the ACK and ends the processing (step S208).

### (3) Flow of processing in the peripheral terminal 200C

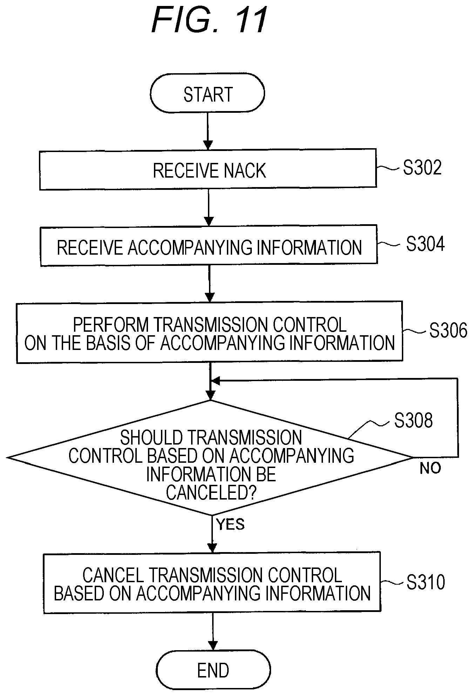

Fig. 11 is a flowchart showing an example of flow of processing executed in the peripheral terminal 200C according to the present embodiment.

As shown in Fig. 11, the peripheral terminal 200C first receives the NACK (step S302) and then receives the accompanying information (step S304). Next, the peripheral terminal 200C controls the transmission on the basis of the accompanying information (step S306). For example, the peripheral terminal 200C transmits the second packet/or stops the transmission of the second packet by using the transmission parameter indicated by the first accompanying information or the transmission parameter instructed by the base station 100 on the basis of the third accompanying information. Furthermore, the peripheral terminal 200C may transmit the NACK on behalf of the reception terminal 200B or in cooperation with the reception terminal 200B on the basis of the fourth accompanying information.

Thereafter, the peripheral terminal 200C determines whether or not the transmission control based on the accompanying information should be canceled (step S308). In a case where it is determined that the transmission control based on the accompanying information should not be canceled (step S308/NO), the processing returns back to step S308. On the other hand, in a case where it is determined that the transmission control based on the accompanying information should be canceled (step S308/YES), the peripheral terminal 200C cancels the transmission control based on the accompanying information (step S310).

### (4) Flow of processing in the transmission terminal 200A

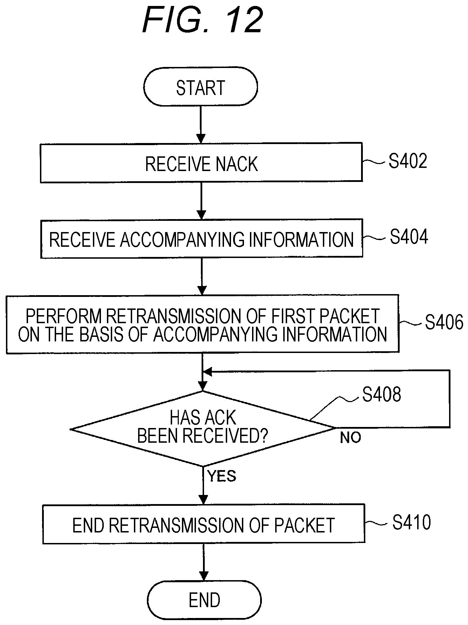

Fig. 12 is a flowchart showing an example of flow of processing executed in the transmission terminal 200A according to the present embodiment.

As shown in Fig. 12, the transmission terminal 200A first receives the NACK (step S402), and then the transmission terminal 200A receives the accompanying information (step S404). Next, the transmission terminal 200A retransmits the first packet on the basis of the accompanying information (step S406). For example, the transmission terminal 200A retransmits the first packet by using the transmission parameter indicated by the second accompanying information or the transmission parameter instructed by the base station 100 on the basis of the third accompanying information.

Thereafter, the transmission terminal 200A determines whether or not the ACK corresponding to the retransmitted first packet has been received (step S408). In a case where it is determined that the ACK has not been received (step S408/NO), the processing returns back to step S408. On the other hand, in a case where it is determined that the ACK has been received (step S408/YES), the transmission terminal 200A ends the retransmission of the first packet (step S410).

### <<4. Use cases>>

The use cases of the sidelink communication will be specifically described below.

First, the base station 100 sets a resource pool for sidelink communication, and the transmission terminal 200A transmits the first packet by the sidelink using the resource pool.

The reception terminal 200B decodes the first packet. When the reception terminal 200B fails to decode the first packet, the reception terminal 200B transmits the NACK. The reception terminal 200B recognizes that the priority level of the first packet is high on the basis of the information described in the sidelink control information (SCI) transmitted from the transmission terminal 200A.

Therefore, the reception terminal 200B broadcasts the first accompanying information to the peripheral terminal 200C in association with the NACK. Such first accompanying information includes information instructing that transmission of the second packet having a priority level equal to or less than a predetermined threshold value is stopped for a period of 10 ms.

The peripheral terminal 200C receives the NACK from the reception terminal 200B and decodes the resource with which the NACK has been received or the instructed resource to acquire the first accompanying information. Then, the peripheral terminal 200C performs control to stop the transmission of the second packet having the priority level equal to or less than the predetermined threshold value for a period of 10 ms on the basis of the first accompanying information.

Moreover, the reception terminal 200B transmits the second accompanying information to the transmission terminal 200A in association with the NACK. Such second accompanying information includes instructions for the number of times of retransmission, transmission power, and resources for retransmission.

The transmission terminal 200A receives the NACK from the reception terminal 200B and decodes the resource with which the NACK has been received or the instructed resource to acquire the second accompanying information. Then, the transmission terminal 200A retransmits the first packet with the specified resource using the specified transmission power the specified number of times of retransmission.

Since the reception terminal 200B has received the retransmitted first packet and succeeded in decoding, the reception terminal 200B transmits the ACK to the transmission terminal 200A. In this way, communication is completed. In this use case, since the peripheral terminal 200C stops the transmission of the second packet, it became possible to reduce the interference received by the retransmitted first packet. Therefore, the reception terminal 200B can receive the first packet more unfailingly.

### <<5. Application example>>

The technology according to the present disclosure can be applied to various products.

For example, the base station 100 may be realized as any type of evolved Node B (eNB) such as a macro eNB or a small eNB. The small eNB may be an eNB that covers cells smaller than a macro cell, such as a pico eNB, a micro eNB, a home (femto) eNB, or the like. Instead, the base station 100 may be realized as another type of base station such as a NodeB or a base transceiver station (BTS). The base station 100 may include a main body (also referred to as a base station apparatus) that controls wireless communication, and one or more remote radio heads (RRHs) that are arranged at a location different from the main body. Furthermore, various types of terminals, which will be described later, may operate as the base station 100 by temporarily or semi-permanently executing the base station function.

Furthermore, for example, the terminal apparatus 200 may be realized as a mobile terminal such as a smartphone, a tablet personal computer (PC), a notebook PC, a portable game terminal, a portable/dongle type mobile router, or a digital camera, or an in-vehicle terminal such as a car navigation apparatus. Furthermore, the terminal apparatus 200 may be realized as a terminal (also referred to as a machine type communication (MTC) terminal) that performs machine to machine (M2M) communication. Moreover, the terminal apparatus 200 may be a wireless communication module mounted on these terminals (for example, an integrated circuit module configured by one die).

### <5.1. Application examples related to base stations>

### (First application example)

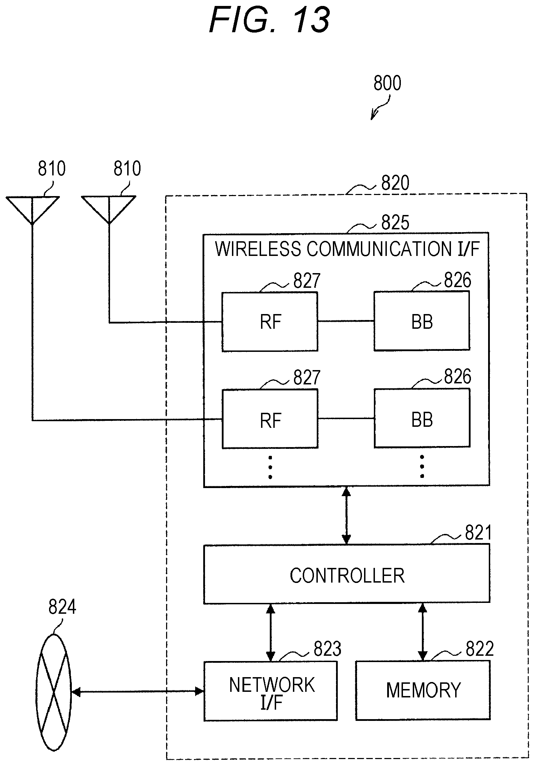

Fig. 13 is a block diagram showing a first example of a schematic configuration of an eNB to which the technology according to the present disclosure can be applied. An eNB 800 has one or more antennas 810 and a base station apparatus 820. Each antenna 810 and the base station apparatus 820 can be connected to each other via an RF cable.

Each of the antennas 810 includes a single or multiple antenna elements (such as multiple antenna elements included in a MIMO antenna), and is used for the base station apparatus 820 to transmit and receive radio signals. The eNB 800 may include the multiple antennas 810, as illustrated in Fig. 13, and, for example, the multiple antennas 810 may be compatible with multiple frequency bands used by the eNB 800. Note that although Fig. 13 shows the example in which the eNB 800 includes the multiple antennas 810, the eNB 800 may also include a single antenna 810.

The base station apparatus 820 includes a controller 821, a memory 822, a network interface 823, and a wireless communication interface 825.

The controller 821 may be, for example, a CPU or a DSP, and operates various functions of a higher layer of the base station apparatus 820. For example, the controller 821 generates a data packet from data in signals processed by the wireless communication interface 825, and transfers the generated packet via the network interface 823. The controller 821 may bundle data from multiple base band processors to generate a bundled packet, and transfer the generated bundled packet. Furthermore, the controller 821 may have logical functions of executing control such as radio resource control, radio bearer control, mobility management, admission control, and scheduling. Furthermore, the control may be executed in cooperation with an eNB or a core network node in the vicinity. The memory 822 includes RAM and ROM, and stores a program that is executed by the controller 821, and various types of control data (such as a terminal list, transmission power data, and scheduling data).

The network interface 823 is a communication interface for connecting the base station apparatus 820 to a core network 824. The controller 821 may communicate with a core network node or another eNB via the network interface 823. In this case, the eNB 800 may be connected to a core network node or another eNB through a logical interface (e.g., S1 interface or X2 interface). The network interface 823 may also be a wired communication interface or a wireless communication interface for wireless backhaul. In a case where the network interface 823 is a wireless communication interface, the network interface 823 may use a higher frequency band for wireless communication than a frequency band used by the wireless communication interface 825.

The wireless communication interface 825 supports any cellular communication scheme such as long term evolution (LTE) and LTE-Advanced, and provides wireless connection to a terminal positioned in a cell of the eNB 800 via the antenna 810. The wireless communication interface 825 can typically include, for example, a baseband (BB) processor 826 and an RF circuit 827. The BB processor 826 may perform, for example, encoding/decoding, modulating/demodulating, and multiplexing/demultiplexing, and executes various types of signal processing of layers (such as L1, medium access control (MAC), radio link control (RLC), and a packet data convergence protocol (PDCP)). The BB processor 826 may have a part or all of the above-described logical functions instead of the controller 821. The BB processor 826 may be a memory that stores a communication control program, or a module that includes a processor and a related circuit that executes the program, and updating the program may allow the functions of the BB processor 826 to be changed. Furthermore, the module may be a card or a blade that is inserted into a slot of the base station apparatus 820. Alternatively, the module may also be a chip that is mounted on the card or the blade. Meanwhile, the RF circuit 827 may include, for example, a mixer, a filter, and an amplifier, and transmits and receives radio signals via the antenna 810.

The wireless communication interface 825 may include the multiple BB processors 826, as illustrated in Fig. 13. For example, the multiple BB processors 826 may be compatible with multiple frequency bands used by the eNB 800. Furthermore, the wireless communication interface 825 may include the multiple RF circuits 827, as illustrated in Fig. 13. For example, the multiple RF circuits 827 may be compatible with multiple antenna elements. Note that although Fig. 13 shows the example in which the wireless communication interface 825 includes the multiple BB processors 826 and the multiple RF circuits 827, the wireless communication interface 825 may also include a single BB processor 826 or a single RF circuit 827.

In the eNB 800 shown in Fig. 13, one or more configuration elements (setting unit 151 and/or communication control unit 153) included in the control unit 150 described with reference to Fig. 3 may be implemented in the wireless communication interface 825. Alternatively, at least some of these configuration elements may be implemented in the controller 821. As an example, the eNB 800 may be equipped with a module including a part or all of the wireless communication interface 825 (for example, the BB processor 826) and/or the controller 821, and the one or more of the above configuration elements may be implemented in the module. In this case, the module may store a program for causing the processor to function as the one or more configuration elements (in other words, a program for causing the processor to execute the operation of the one or more configuration elements) and execute the program. As another example, a program for causing the processor to function as the one or more configuration elements may be installed in the eNB 800, and the wireless communication interface 825 (e.g., BB processor 826) and/or the controller 821 may execute the program. As described above, the eNB 800, the base station apparatus 820, or the module may be provided as an apparatus including the one or more configuration elements described above, and a program for causing the processor to function as the one or more configuration elements may be provided. Furthermore, a readable recording medium on which the program described above is recorded may be provided.

Furthermore, in the eNB 800 shown in Fig. 13, the wireless communication unit 120 described with reference to Fig. 3 may be implemented in the wireless communication interface 825 (for example, RF circuit 827). Furthermore, the antenna unit 110 may be implemented in the antenna 810. Furthermore, the network communication unit 130 may be implemented in the controller 821 and/or the network interface 823. Furthermore, the storage unit 140 may be implemented in the memory 822.

### (Second application example)

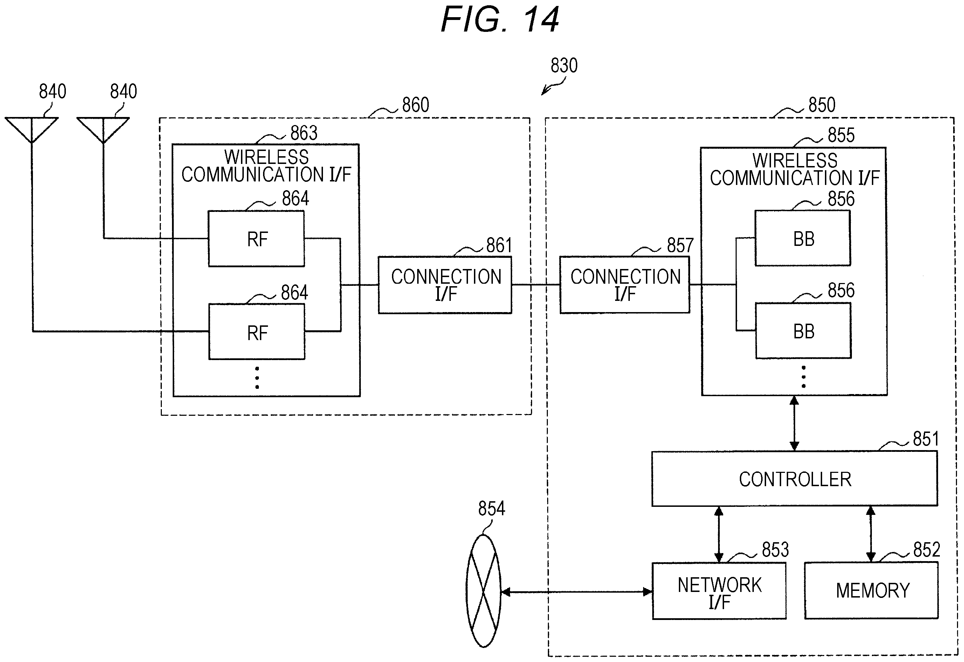

Fig. 14 is a block diagram showing a second example of a schematic configuration of an eNB to which the technology according to the present disclosure can be applied. An eNB 830 includes one or more antennas 840, a base station apparatus 850, and an RRH 860. Each antenna 840 and the RRH 860 can be connected to each other via an RF cable. Furthermore, the base station apparatus 850 and the RRH 860 can be connected to each other via a high speed line such as an optical fiber cable.

Each of the antennas 840 includes a single or multiple antenna elements (such as multiple antenna elements included in a MIMO antenna), and is used for the RRH 860 to transmit and receive radio signals. The eNB 830 may include the multiple antennas 840, as illustrated in Fig. 14. For example, the multiple antennas 840 may be compatible with multiple frequency bands used by the eNB 830. Note that although Fig. 14 shows the example in which the eNB 830 includes the multiple antennas 840, the eNB 830 may include a single antenna 840.

The base station apparatus 850 includes a controller 851, a memory 852, a network interface 853, a wireless communication interface 855, and a connection interface 857. The controller 851, the memory 852, and the network interface 853 are similar to the controller 821, the memory 822, and the network interface 823 described with reference to Fig. 13.

The wireless communication interface 855 supports any cellular communication scheme such as LTE and LTE-Advanced, and provides wireless connection to a terminal positioned in a sector corresponding to the RRH 860 via the RRH 860 and the antenna 840. The wireless communication interface 855 can typically include, for example, a BB processor 856. The BB processor 856 is similar to the BB processor 826 described with reference to Fig. 13, except the BB processor 856 is connected to the RF circuit 864 of the RRH 860 via the connection interface 857. The wireless communication interface 855 may include the multiple BB processors 856, as illustrated in Fig. 14. For example, the multiple BB processors 856 may be compatible with multiple frequency bands used by the eNB 830. Note that although Fig. 14 shows the example in which the wireless communication interface 855 includes the multiple BB processors 856, the wireless communication interface 855 may include a single BB processor 856.

The connection interface 857 is an interface for connecting the base station apparatus 850 (wireless communication interface 855) to the RRH 860. The connection interface 857 may also be a communication module for communication in the above-described high speed line that connects the base station apparatus 850 (wireless communication interface 855) to the RRH 860.

Furthermore, the RRH 860 includes a connection interface 861 and a wireless communication interface 863.

The connection interface 861 is an interface for connecting the RRH 860 (wireless communication interface 863) to the base station apparatus 850. The connection interface 861 may be a communication module for communication in the above-described high speed line.

The wireless communication interface 863 transmits and receives radio signals via the antenna 840. The wireless communication interface 863 can typically include, for example, the RF circuit 864. The RF circuit 864 may include, for example, a mixer, a filter, and an amplifier, and transmits and receives radio signals via the antenna 840. The wireless communication interface 863 may include multiple RF circuits 864, as illustrated in Fig. 14. For example, the multiple RF circuits 864 may support multiple antenna elements. Note that although Fig. 14 shows the example in which the wireless communication interface 863 includes the multiple RF circuits 864, the wireless communication interface 863 may include a single RF circuit 864.

In the eNB 830 shown in Fig. 14, one or more configuration elements (setting unit 151 and/or communication control unit 153) included in the control unit 150 described with reference to Fig. 3 may be implemented in the wireless communication interface 855 and/or the wireless communication interface 863. Alternatively, at least some of these configuration elements may be implemented in the controller 851. As an example, the eNB 830 may be equipped with a module including a part or all of the wireless communication interface 855 (for example, the BB processor 856) and/or the controller 851, and the one or more of the above configuration elements may be implemented in the module. In this case, the module may store a program for causing the processor to function as the one or more configuration elements (in other words, a program for causing the processor to execute the operation of the one or more configuration elements) and execute the program. As another example, a program for causing the processor to function as the one or more configuration elements may be installed in the eNB 830, and the wireless communication interface 855 (e.g., BB processor 856) and/or the controller 851 may execute the program. As described above, the eNB 830, the base station apparatus 850, or the module may be provided as an apparatus including the one or more configuration elements described above, and a program for causing the processor to function as the one or more configuration elements may be provided. Furthermore, a readable recording medium on which the program described above is recorded may be provided.

Furthermore, in the eNB 830 shown in Fig. 14, for example, the wireless communication unit 120 described with reference to Fig. 3 may be implemented in the wireless communication interface 863 (for example, RF circuit 864). Furthermore, the antenna unit 110 may be implemented in the antenna 840. Furthermore, the network communication unit 130 may be implemented in the controller 851 and/or the network interface 853. Furthermore, the storage unit 140 may be implemented in the memory 852.

### <5.2. Application example related to terminal apparatus>

### (First application example)

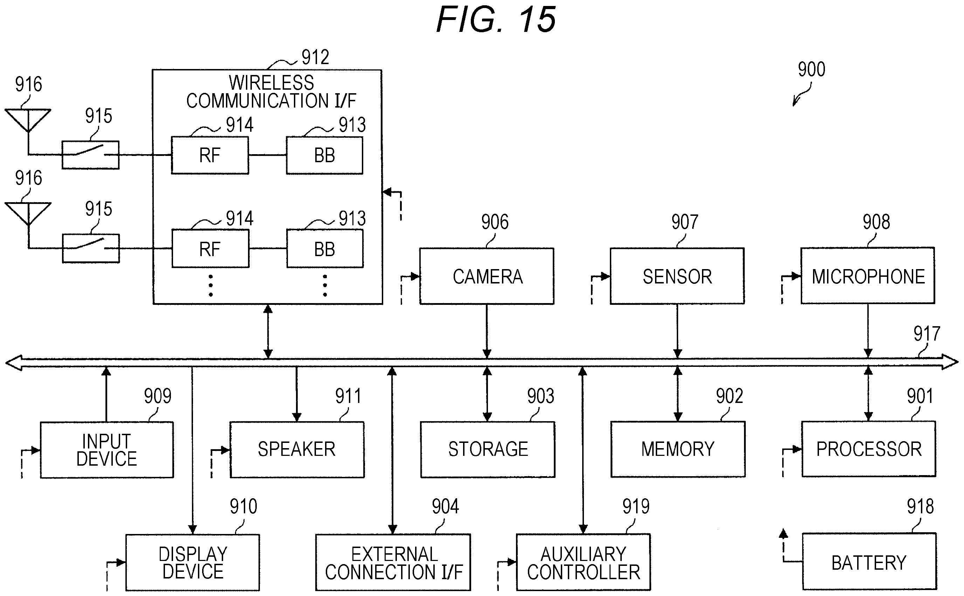

Fig. 15 is a block diagram showing an example of a schematic configuration of a smartphone 900 to which the technology according to the present disclosure can be applied. The smartphone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes RAM and ROM, and stores a program that is executed by the processor 901 and data. The storage 903 can include a storage medium such as a semiconductor memory or a hard disk. The external connection interface 904 is an interface for connecting an external device such as a memory card and a universal serial bus (USB) device to the smartphone 900.

The camera 906 includes, for example, an image sensor such as a charge coupled device (CCD) and a complementary metal oxide semiconductor (CMOS), and generates a captured image. The sensor 907 can include, for example, a group of sensors such as a measurement sensor, a gyro sensor, a geomagnetic sensor, and an acceleration sensor. The microphone 908 converts sounds that are input to the smartphone 900 to audio signals. The input device 909 includes, for example, a touch sensor that detects touch onto a screen of the display device 910, a keypad, a keyboard, a button, or a switch, and receives an operation or an information input from a user. The display device 910 includes a screen such as a liquid crystal display (LCD) and an organic light-emitting diode (OLED) display, and displays an output image of the smartphone 900. The speaker 911 converts audio signals that are output from the smartphone 900 to sounds.

The wireless communication interface 912 supports any cellular communication scheme such as LTE and LTE-Advanced, and executes wireless communication. The wireless communication interface 912 can typically include, for example, a BB processor 913 and an RF circuit 914. The BB processor 913 may perform, for example, encoding/decoding, modulating/demodulating, and multiplexing/demultiplexing, and executes various types of signal processing for wireless communication. Meanwhile, the RF circuit 914 may include, for example, a mixer, a filter, and an amplifier, and transmits and receives radio signals via the antenna 916. The wireless communication interface 912 may be a one chip module that has the BB processor 913 and the RF circuit 914 integrated thereon. The wireless communication interface 912 may include the multiple BB processors 913 and the multiple RF circuits 914, as illustrated in Fig. 15. Note that although Fig. 15 shows the example in which the wireless communication interface 912 includes the multiple BB processors 913 and the multiple RF circuits 914, the wireless communication interface 912 may include a single BB processor 913 or a single RF circuit 914.

Moreover, in addition to a cellular communication scheme, the wireless communication interface 912 may support another type of wireless communication scheme such as a short-distance wireless communication scheme, a near field communication scheme, or a wireless local area network (LAN) scheme. In that case, the wireless communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the wireless communication interface 912.

Each of the antennas 916 includes a single or multiple antenna elements (such as multiple antenna elements included in a MIMO antenna), and is used for the wireless communication interface 912 to transmit and receive radio signals. The smartphone 900 may include the multiple antennas 916, as illustrated in Fig. 15. Note that although Fig. 15 shows the example in which the smartphone 900 includes the multiple antennas 916, the smartphone 900 may include a single antenna 916.

Moreover, the smartphone 900 may include the antenna 916 for each wireless communication scheme. In that case, the antenna switch 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies power to blocks of the smartphone 900 illustrated in Fig. 15 via feeder lines, which are partially shown as dashed lines in the drawing. The auxiliary controller 919 operates a minimum necessary function of the smartphone 900, for example, in a sleep mode.

In the smartphone 900 shown in Fig. 15, one or more configuration elements (setting unit 241 and/or communication control unit 243) included in the control unit 240 described with reference to Fig. 4 may be implemented in the wireless communication interface 912. Alternatively, at least some of these configuration elements may be implemented by the processor 901 or the auxiliary controller 919. As an example, the smartphone 900 may be equipped with a module including a part or all of the wireless communication interface 912 (for example, the BB processor 913), the processor 901, and/or the auxiliary controller 919, and the one or more of the above configuration elements may be implemented in the module. In this case, the module may store a program for causing the processor to function as the one or more configuration elements (in other words, a program for causing the processor to execute the operation of the one or more configuration elements) and execute the program. As another example, a program for causing the processor to function as the one or more configuration elements may be installed in the smartphone 900, and the wireless communication interface 912 (e.g., BB processor 913), the processor 901, and/or the auxiliary controller 919 may execute the program. As described above, the smartphone 900 or the module may be provided as an apparatus including the one or more configuration elements described above, and a program for causing the processor to function as the one or more configuration elements may be provided. Furthermore, a readable recording medium on which the program described above is recorded may be provided.

Furthermore, in the smartphone 900 shown in Fig. 15, for example, the wireless communication unit 220 described with reference to Fig. 4 may be implemented in the wireless communication interface 912 (for example, RF circuit 914). Furthermore, the antenna unit 210 may be implemented in the antenna 916. Furthermore, the storage unit 230 may be implemented in the memory 902.

### (Second application example)

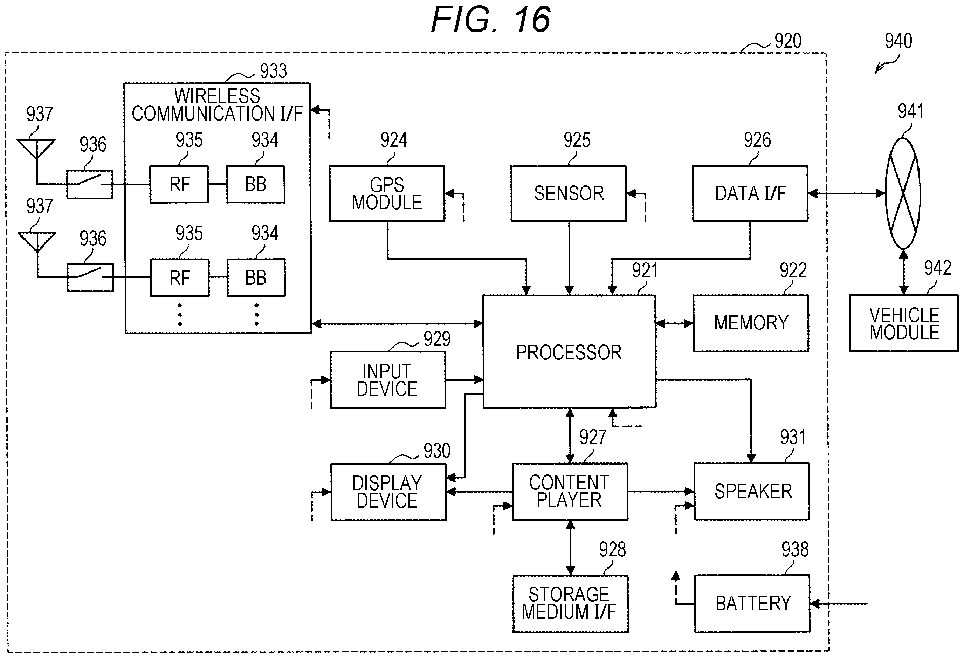

Fig. 16 is a block diagram showing an example of a schematic configuration of a car navigation apparatus 920 to which the technology according to the present disclosure can be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or a SoC, and controls a navigation function and another function of the car navigation apparatus 920. The memory 922 includes RAM and ROM, and stores a program that is executed by the processor 921 and data.

The GPS module 924 uses GPS signals received from a GPS satellite to measure a position (such as latitude, longitude, and altitude) of the car navigation apparatus 920. The sensor 925 can include, for example, a group of sensors such as a gyro sensor, a geomagnetic sensor, and a barometric sensor. The data interface 926 is connected to, for example, an in-vehicle network 941 via a terminal, which is not shown, and acquires data generated on the vehicle side such as vehicle speed data.

The content player 927 reproduces content stored in a storage medium (such as a CD and a DVD) that is inserted into the storage medium interface 928. The input device 929 includes, for example, a touch sensor that detects touch onto a screen of the display device 930, a button, or a switch, and receives an operation or an information input from a user. The display device 930 includes a screen such as an LCD or an OLED display, and displays an image of the navigation function or content that is reproduced. The speaker 931 outputs sounds of the navigation function or the content that is reproduced.

The wireless communication interface 933 supports any cellular communication scheme such as LTE and LTE-Advanced, and executes wireless communication. The wireless communication interface 933 can typically include, for example, a BB processor 934 and an RF circuit 935. The BB processor 934 may perform, for example, encoding/decoding, modulating/demodulating, and multiplexing/demultiplexing, and executes various types of signal processing for wireless communication. Meanwhile, the RF circuit 935 may include, for example, a mixer, a filter, and an amplifier, and transmits and receives radio signals via the antenna 937. The wireless communication interface 933 may be a one chip module that has the BB processor 934 and the RF circuit 935 integrated thereon. The wireless communication interface 933 may include the multiple BB processors 934 and the multiple RF circuits 935, as illustrated in Fig. 16. Note that although Fig. 16 shows the example in which the wireless communication interface 933 includes the multiple BB processors 934 and the multiple RF circuits 935, the wireless communication interface 933 may include a single BB processor 934 or a single RF circuit 935.

Moreover, in addition to a cellular communication scheme, the wireless communication interface 933 may support another type of wireless communication scheme such as a short-distance wireless communication scheme, a near field communication scheme, or a wireless LAN scheme. In that case, the wireless communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the wireless communication interface 933.

Each of the antennas 937 includes a single or multiple antenna elements (such as multiple antenna elements included in a MIMO antenna), and is used for the wireless communication interface 933 to transmit and receive radio signals. The car navigation apparatus 920 may include the multiple antennas 937, as illustrated in Fig. 16. Note that although Fig. 16 shows the example in which the car navigation apparatus 920 includes the multiple antennas 937, the car navigation apparatus 920 may include a single antenna 937.

Moreover, the car navigation apparatus 920 may include the antenna 937 for each wireless communication scheme. In that case, the antenna switches 936 may be omitted from the configuration of the car navigation apparatus 920.

The battery 938 supplies power to blocks of the car navigation apparatus 920 shown in Fig. 16 via feeder lines that are partially shown as dashed lines in the drawing. Furthermore, the battery 938 accumulates power supplied form the vehicle side.

In the car navigation apparatus 920 shown in Fig. 16, one or more configuration elements (setting unit 241 and/or communication control unit 243) included in the control unit 240 described with reference to Fig. 4 may be implemented in the wireless communication interface 933. Alternatively, at least some of these configuration elements may be implemented in the processor 921. As an example, the car navigation apparatus 920 may be equipped with a module including a part or all of the wireless communication interface 933 (for example, the BB processor 934) and/or the processor 921, and the one or more of the above configuration elements may be implemented in the module. In this case, the module may store a program for causing the processor to function as the one or more configuration elements (in other words, a program for causing the processor to execute the operation of the one or more configuration elements) and execute the program. As another example, a program for causing the processor to function as the one or more configuration elements may be installed in the car navigation apparatus 920, and the wireless communication interface 933 (e.g., BB processor 934) and/or the processor 921 may execute the program. As described above, the car navigation apparatus 920 or the module may be provided as an apparatus including the one or more configuration elements described above, and a program for causing the processor to function as the one or more configuration elements may be provided. Furthermore, a readable recording medium on which the program described above is recorded may be provided.

Furthermore, in the car navigation apparatus 920 shown in Fig. 16, for example, the wireless communication unit 220 described with reference to Fig. 4 may be implemented in the wireless communication interface 933 (for example, RF circuit 935). Furthermore, the antenna unit 210 may be implemented in the antenna 937. Furthermore, the storage unit 230 may be implemented in the memory 922.

Furthermore, the technology of the present disclosure may be realized as an in-vehicle system (or a vehicle) 940 including one or more blocks of the car navigation apparatus 920, the in-vehicle network 941, and a vehicle module 942. The vehicle module 942 generates vehicle data such as vehicle speed, engine rotation rate, or failure information, and outputs the generated data to the in-vehicle network 941.

### <<6. Conclusion>>

As described above, one embodiment of the present disclosure has been described in detail with reference to Figs. 1 to 16. As described above, in a case where the reception terminal 200B according to the present embodiment fails to receive the first packet transmitted by the sidelink from the transmission terminal 200A, the reception terminal 200B transmits the NACK by the sidelink and transmits the first accompanying information for imposing restrictions on the operation of the peripheral terminal 200C by the sidelink in association with the NACK. Restrictions based on the first accompanying information are imposed on the operation of the peripheral terminal 200C. For example, the peripheral terminal 200C stops the transmission of the second packet or the like. Therefore, it is possible to reduce the interference caused by the transmission and reception of the second packet with respect to the transmission and reception of the first packet retransmitted by the transmission terminal 200A. Therefore, it is possible to improve the probability of successful reception of the retransmitted first packet by the reception terminal 200B.

Furthermore, in a case where the reception terminal 200B according to the present embodiment fails to receive the first packet transmitted by the sidelink from the transmission terminal 200A, the reception terminal 200B transmits the NACK by the sidelink and transmits the second accompanying information for controlling the retransmission of the first packet by the transmission terminal 200A by the sidelink in association with the NACK. The transmission terminal 200A retransmits the first packet on the basis of the second accompanying information. For example, the transmission terminal 200A retransmits the first packet the number of times of retransmission instructed in the second accompanying information using the transmission power instructed in the second accompanying information with the resource instructed in the second accompanying information. The transmission terminal 200A can more unfailingly perform highly reliable transmission by setting the transmission parameters on the basis of the second accompanying information fed back from the reception terminal 200B. Therefore, it is possible to improve the probability of successful reception of the retransmitted first packet by the reception terminal 200B.

The technologies described above can be applied to a variety of use cases. For example, in the use case of factory automation, the technology described above can be applied to communication between robots that operate autonomously under the management by a management entity. In this case, since each robot manages its own status, it is possible to avoid the risk in a case where the management entity performs central management (that is, the risk due to centralized management). Moreover, in a case where the technology described above is applied, it can be expected that the control overhead will be reduced as compared with the case where the management entity performs central management.

The preferred embodiments of the present disclosure have been described above with reference to the accompanying drawings, while the technical scope of the present disclosure is not limited to the above examples. A person skilled in the art may find various alterations and variations within the scope of the appended claims, and it should be understood that they will naturally come under the technical scope of the present disclosure.

For example, in the above embodiment, the example in which the present technology is applied to the terminal-to-terminal communication in cellular communication has been described, but the present technology is not limited to such an example. For example, the present technology may be applied to the terminal-to-terminal communication in another communication scheme such as Wi-Fi (registered trademark).

Furthermore, the processing described in conjunction with the flowchart and the sequence diagram in the present specification may not necessarily be executed in the order indicated in the drawings. Some processing steps may be executed in parallel. Furthermore, an additional processing step may be adopted, and some processing steps may be omitted.

Furthermore, the effects described in the present specification are merely illustrative or exemplified effects, and are not limitative. That is, with or in the place of the above effects, the technology according to the present disclosure may achieve other effects that are clear to those skilled in the art from the description of the present specification.

Note that the configuration below also falls within the technical scope of the present disclosure.
(1) A communication apparatus including:
   a control unit that transmits a negative acknowledgement by a sidelink in a case of failing to receive a packet transmitted from a transmission terminal by a sidelink, and transmits information for imposing restrictions on an operation of a peripheral terminal by a sidelink in association with the negative acknowledgement.
(2) The communication apparatus according to (1), in which the information for imposing the restrictions on the operation of the peripheral terminal includes information for stopping transmission of another packet by the peripheral terminal.
(3) The communication apparatus according to (2), in which the information for imposing the restrictions on the operation of the peripheral terminal includes information instructing a resource for which transmission of the another packet should be stopped.
(4) The communication apparatus according to (2) or (3), in which the information for imposing the restrictions on the operation of the peripheral terminal includes information instructing the peripheral terminal that should stop transmission of the another packet.
(5) The communication apparatus according to any one of (2) to (4), in which the information for imposing the restrictions on the operation of the peripheral terminal includes information instructing a priority of the another packet that should be stopped from being transmitted.
(6) The communication apparatus according to any one of (2) to (5), in which the information for imposing the restrictions on the operation of the peripheral terminal includes information instructing a geographic area for which transmission of the another packet should be stopped.
(7) The communication apparatus according to any one of (1) to (6), in which the information for imposing the restrictions on the operation of the peripheral terminal includes information for controlling transmission power used for transmission of another packet by the peripheral terminal.
(8) The communication apparatus according to any one of (1) to (7), in which the information for imposing the restrictions on the operation of the peripheral terminal includes information for controlling a multiplexing scheme used for transmission of another packet by the peripheral terminal.
(9) The communication apparatus according to any one of (1) to (8), in which the control unit transmits information for causing the peripheral terminal to transmit the negative acknowledgement by a sidelink in association with the negative acknowledgement.
(10) The communication apparatus according to (9), in which the information for causing the peripheral terminal to transmit the negative acknowledgement includes information for causing the peripheral terminal to transmit the negative acknowledgement using a same resource as the communication apparatus.
(11) The communication apparatus according to any one of (1) to (10), in which the control unit transmits the negative acknowledgement with a resource associated with the packet that has failed to be received.
(12) The communication apparatus according to any one of (1) to (11), in which the control unit transmits identification information of the packet that has failed to be received in association with the negative acknowledgement.
(13) The communication apparatus according to any one of (1) to (12), in which the control unit transmits, to a base station, the negative acknowledgement by an uplink and transmits information requesting imposing of restrictions on the operation of the peripheral terminal in association with the negative acknowledgement by an uplink.
(14) A communication apparatus including:
   a control unit that transmits a negative acknowledgement by a sidelink in a case of failing to receive a packet transmitted from a transmission terminal by a sidelink, and transmits information for controlling retransmission of the packet by the transmission terminal by a sidelink in association with the negative acknowledgement.
(15) The communication apparatus according to (14), in which the information for controlling the retransmission of the packet by the transmission terminal includes information indicating a required QoS level of the packet to be retransmitted.
(16) The communication apparatus according to (15), in which the control unit transmits a plurality of the negative acknowledgements using a resource of a pattern according to the information indicating the required QoS level of the packet.
(17) The communication apparatus according to any one of (14) to (16), in which the control unit transmits information requesting control of the retransmission of the packet by the transmission terminal to a base station by an uplink in association with the negative acknowledgement.
(18) A communication apparatus including:
   a control unit that transmits a packet to a reception terminal by a sidelink, receives a negative acknowledgement indicating that the reception terminal has failed to receive the packet and information for controlling retransmission of the packet associated with the negative acknowledgement by a sidelink, and performs control of the retransmission of the packet on the basis of the information received.
(19) The communication apparatus according to (18), in which the control unit transmits information indicating a resource of a sidelink that should be used for transmission of an acknowledgement or negative acknowledgement corresponding to the packet to the reception terminal.
(20) The communication apparatus according to (19), in which the resource of the sidelink is used by the reception terminal or by a peripheral terminal that transmits the negative acknowledgement on behalf of the reception terminal or in cooperation with the reception terminal.
(21) A communication apparatus including:
   a control unit that receives a negative acknowledgement and information associated with the negative acknowledgement transmitted by a sidelink by a reception terminal that has failed to receive a packet transmitted from a transmission terminal by a sidelink, and performs communication processing under restrictions indicated by the information associated with the negative acknowledgement.
(22) A communication apparatus including:
   a control unit that receives a negative acknowledgement and information associated with the negative acknowledgement transmitted by a sidelink by a reception terminal that has failed to receive a packet transmitted from a transmission terminal by a sidelink, and transmits the negative acknowledgement by a sidelink on behalf of the reception terminal or in cooperation with the reception terminal on the basis of the information associated with the negative acknowledgement.

### REFERENCE SIGNS LIST

- 1: System
- 11: Cell
- 20: Core network
- 30: PDN
- 100: Base station
- 110: Antenna unit
- 120: Wireless communication unit
- 130: Network communication unit
- 140: Storage unit
- 150: Control unit
- 151: Setting unit
- 153: Communication control unit
- 200: Terminal apparatus
- 200A: Transmission terminal
- 200B: Reception terminal
- 200C: Peripheral terminal
- 210: Antenna unit
- 220: Wireless communication unit
- 230: Storage unit
- 240: Control unit
- 241: Setting unit
- 243: Communication control unit

## Claims

1. A communication apparatus comprising:
a control unit that transmits a negative acknowledgement by a sidelink in a case of failing to receive a packet transmitted from a transmission terminal by a sidelink, and transmits information for imposing restrictions on an operation of a peripheral terminal by a sidelink in association with the negative acknowledgement.

2. The communication apparatus according to claim 1, wherein the information for imposing the restrictions on the operation of the peripheral terminal includes information for stopping transmission of another packet by the peripheral terminal.

3. The communication apparatus according to claim 2, wherein the information for imposing the restrictions on the operation of the peripheral terminal includes information instructing a resource for which transmission of the another packet should be stopped.

4. The communication apparatus according to claim 2, wherein the information for imposing the restrictions on the operation of the peripheral terminal includes information instructing the peripheral terminal that should stop transmission of the another packet.

5. The communication apparatus according to claim 2, wherein the information for imposing the restrictions on the operation of the peripheral terminal includes information instructing a priority of the another packet that should be stopped from being transmitted.

6. The communication apparatus according to claim 2, wherein the information for imposing the restrictions on the operation of the peripheral terminal includes information instructing a geographic area for which transmission of the another packet should be stopped.

7. The communication apparatus according to claim 1, wherein the information for imposing the restrictions on the operation of the peripheral terminal includes information for controlling transmission power used for transmission of another packet by the peripheral terminal.

8. The communication apparatus according to claim 1, wherein the information for imposing the restrictions on the operation of the peripheral terminal includes information for controlling a multiplexing scheme used for transmission of another packet by the peripheral terminal.

9. The communication apparatus according to claim 1, wherein the control unit transmits information for causing the peripheral terminal to transmit the negative acknowledgement by a sidelink in association with the negative acknowledgement.

10. The communication apparatus according to claim 9, wherein the information for causing the peripheral terminal to transmit the negative acknowledgement includes information for causing the peripheral terminal to transmit the negative acknowledgement using a same resource as the communication apparatus.

11. The communication apparatus according to claim 1, wherein the control unit transmits the negative acknowledgement with a resource associated with the packet that has failed to be received.

12. The communication apparatus according to claim 1, wherein the control unit transmits identification information of the packet that has failed to be received in association with the negative acknowledgement.

13. The communication apparatus according to claim 1, wherein the control unit transmits, to a base station, the negative acknowledgement by an uplink and transmits information requesting imposing of restrictions on the operation of the peripheral terminal in association with the negative acknowledgement by an uplink.

14. A communication apparatus comprising:
a control unit that transmits a negative acknowledgement by a sidelink in a case of failing to receive a packet transmitted from a transmission terminal by a sidelink, and transmits information for controlling retransmission of the packet by the transmission terminal by a sidelink in association with the negative acknowledgement.

15. The communication apparatus according to claim 14, wherein the information for controlling the retransmission of the packet by the transmission terminal includes information indicating a required QoS level of the packet to be retransmitted.

16. The communication apparatus according to claim 15, wherein the control unit transmits a plurality of the negative acknowledgements using a resource of a pattern according to the information indicating the required QoS level of the packet.

17. The communication apparatus according to claim 14, wherein the control unit transmits information requesting control of the retransmission of the packet by the transmission terminal to a base station by an uplink in association with the negative acknowledgement.

18. A communication apparatus comprising:
a control unit that transmits a packet to a reception terminal by a sidelink, receives a negative acknowledgement indicating that the reception terminal has failed to receive the packet and information for controlling retransmission of the packet associated with the negative acknowledgement by a sidelink, and performs control of the retransmission of the packet on a basis of the information received.

19. The communication apparatus according to claim 18, wherein the control unit transmits information indicating a resource of a sidelink that should be used for transmission of an acknowledgement or negative acknowledgement corresponding to the packet to the reception terminal.

20. The communication apparatus according to claim 19, wherein the resource of the sidelink is used by the reception terminal or by a peripheral terminal that transmits the negative acknowledgement on behalf of the reception terminal or in cooperation with the reception terminal.
